# EUROPEAN PATENT SPECIFICATION

(11) **EP 3 408 070 B1**
(45) Date of publication and mention of the grant of the patent: **18.03.2020**
(21) Application number: 17707994.4
(22) Date of filing: 26.01.2017
(51) Int. Cl.: B29C 65/22, B29D 22/02, B31D 5/00

(54) **SYSTEM FOR PRODUCING INFLATED WEBS**
SYSTEM ZUR HERSTELLUNG VON AUFGEBLASENEN BAHNEN
SYSTÈME DE PRODUCTION DE BANDES GONFLÉES

(30) Priority: 29.01.2016 US 201662288759 P
(43) Date of publication of application: 05.12.2018
(73) Proprietor: Sealed Air Corporation (US), Charlotte, NC 28208 (US)
(72) Inventor: SPERRY, Laurence, B., Newton MA 02459 (US); MURCH, Brian, A., Needham MA 02494 (US)
(74) Representative: Uexküll & Stolberg
(86) International application number: PCT/US2017/015100
(87) International publication number: WO 2017/132354

(56) References cited:
- US-A1- 2015 075 114

## Description

This application claims the benefit of U.S. Provisional Application No. 62/288,759 filed January 29, 2016. The present invention relates to a system for producing inflated webs or structures, for example, inflated protective packaging cushioning material.

### BACKGROUND

Inflated material or structures such as cushions or sheets can be used to package items, by wrapping the items in the material and placing the wrapped items in a shipping carton, or simply placing inflated material inside of a shipping carton along with an item to be shipped. The inflated material protects the packaged item by absorbing impacts that may otherwise be fully transmitted to the packaged item during transit, and may also restrict movement of the packaged item within the carton to further reduce the likelihood of damage to the item. A system for producing inflated protective packaging cushioning material is known from US 2015/0075114.

Systems and machines for manufacturing inflated material at relatively high speeds from an inflatable web would benefit from better alignment, tracking, and tension control of the inflatable web as it moves through the machine. This can help to reduce one or more of the noise associated with inflation of the web, improve efficient use of the inflation gas, increase inflation pressure efficiency, reduce wear on the machine parts, reduce down-time, and avoid poorly-inflated, non-inflated, and/or poorly-sealed inflated material, which may result in web wastage and/or premature deflation or other failure in protecting a packaged product. Accordingly, there remains a need in the art for improvements to systems for inflating inflatable webs in the protective packaging field.

### SUMMARY

According to the invention it is disclosed a system for active alignment of an inflatable web with respect to an inflation nozzle as the web is dispensed from a roll for serial inflation by the inflation nozzle. The inflatable web includes top and bottom sheets sealed together by transverse seals to define a series of inflatable chambers having an opening between the terminal ends of the transverse seals and proximate a longitudinal edge of the web for receiving inflation fluid from the nozzle. The system includes a spool adapted to support the roll so that the roll rotates about the spool as the inflatable web is withdrawn from the roll. An actuator is arranged to adjust the position of the roll along the length of the spool. An inflation nozzle is adapted to provide inflation fluid into the openings of the inflatable chambers as the web travels along a path of travel past the inflation nozzle. A tracking sensor includes a sensor arm pivotally mounted at a pivot point at a given location relative the inflation nozzle. The sensor arm has a contact portion and the sensor arm is adapted to pivot on the pivot point as the terminal ends of the transverse seals of the web contact the contact portion of the sensor arm. The tracking sensor also includes an analogue sensor adapted to detect the movement of the sensor arm and to generate an analogue signal varying in relation to the movement of the sensor arm. A controller is operative to receive the analogue signal and based on the analogue signal to send output to the actuator to adjust the position of the roll on the spool to maintain the transverse position of the web within a predetermined range.

These and other objects, advantages, and features of the presently disclosed subject matter will be more readily understood and appreciated by reference to the detailed description and the drawings.

### BRIEF DESCRIPTION OF THE DRAWINGS

FIG. 1 is a perspective view of a machine 10 for inflating and sealing an inflatable web having a series of inflatable containers;
FIG. 2 is similar to FIG. 1, except that it illustrates the machine being used with a roll of an inflatable web to inflate and seal the containers included in the web;
FIG. 3 is a front elevational view of the machine shown in FIG. 1;
FIG. 4 is similar to FIG. 1, except that the blower cover has been removed to show the blower;
FIG. 5 is an elevational view of the machine of FIG. 1, as taken from the opposite side as shown in FIG. 1 and with the backside cover removed to show the components inside of the main housing for the machine;
FIG. 6 is a partial elevational view, taken along lines 6-6 in FIG. 2;
FIG. 7 is a cross-sectional view of the spool, taken along lines 7-7 in FIG. 1;
FIG. 8 is a perspective view of the spool, taken along lines 8-8 in FIG. 7;
FIG. 9 is plan view of the spool as shown in FIG. 8;
FIG. 9A is a partial elevational view of the spool, taken along lines 9A-9A in FIG. 9;
FIG. 9B is similar to FIG. 9, showing a roll being loaded onto the spool;
FIG. 9C is similar to FIG. 9B, showing the position of the roll being adjusted;
FIG. 10 is a plan view of the inflation system, web tracking sensor, and controller components of the machine as shown in FIG. 1;
FIG. 10A is a cross-sectional view taken along lines 10A-10A in FIG. 10;
FIG. 11 is a partial plan view of the machine, taken along lines 11-11 in FIG. 2 and with the web guide removed from the sealing roller;
FIG. 12 is a plan view similar to FIG. 11, showing the advancement of the web to a stopping point;
FIG. 13 is a partial elevational view of the machine, taken along lines 13-13 in FIG. 11;
FIG. 14 is an elevational view similar to FIG. 13, with the web guides in place on the sealing and backing rollers;
FIG. 15 is an elevational view of an alternative web guide embodiment;
FIGS. 16A-16B are similar to FIG. 14, illustrating two different positions of a pivot mechanism;
FIG. 17 is a perspective view of a machine 400 for inflating and sealing an inflatable structure comprising an engaging assembly and an opposing assembly with first and second release mechanisms and a first belt and an opposing second belt having pluralities of teeth;
FIG. 18 is a top down view of the machine of FIG. 17 in operation with a roll of an inflatable web to inflate and seal the inflatable chambers in the web;
FIG. 19 is a side elevational view of a machine 510 for inflating and sealing an inflatable structure comprising an engaging assembly and an opposing assembly with a single release mechanism and a first belt and an opposing second belt having pluralities of teeth, wherein the engaging assembly and the opposing assembly are in an operational position;
FIG. 20 is the machine of FIG. 19 having the engaging assembly and the opposing assembly in a position facilitating insertion of an inflatable structure therebetween;
FIG. 21 is a top down view of an inflated structure having an embossed longitudinal edge, such as may be produced by the embodiments of machines for inflating and sealing an inflatable structure of FIGS. 17-20;
FIG. 22 is a side partial perspective view of machine 310 for inflating and sealing an inflatable structure wherein the sheet engagement device comprises engagement rollers;
FIG. 23 is a representative perspective view of a machine 610 for inflating and sealing an inflatable web, the machine including sheet engagement device 618 and tracking sensor 680, and showing spool 619 in a representative exploded view enclosing brake system 640;
FIG. 24 is a side partial perspective side elevation detail view of the machine 610 of FIG. 23 having the sheet engagement device cover removed to illustrate the plurality of springs 612 to bias the engagement rollers 349 toward the path of travel 614 between the top and bottom engagement rollers;
FIG. 25 is a detail side elevation view of the engagement rollers 349 and springs 612 of FIG. 24;
FIG. 26 is a representative detail perspective view of the machine 610 of FIG. 23 showing the tracking sensor 680 in the normal, non-contact position;
FIG. 27 is a similar view to FIG. 26, but showing the tracking sensor 680 in the contacted position;
FIG. 28 is a representative perspective view of the brake system 640 of the machine 610 of FIG. 23 in the retracted position;
FIG. 29 is a representative perspective view of the brake system 640 of FIG. 28 in the extended position;
FIG. 30 is a representative perspective view of a machine 710 having a system for alignment of an inflatable web, the machine including movably biased inflation nozzle 722;
FIG. 31 is a representative perspective view of machine 710 similar to FIG. 30, but having cover 735 removed from the sheet engagement device 618 and showing the block 727 in see-through to reveal spring 725;
FIG. 32 is a top down view of the machine 710 of FIG. 31 having the movably biased inflation nozzle 722 fully pivoted inwardly;
FIG. 33 is a top down view of the machine 710 of FIG. 31 similar to that of FIG. 32, but having the movably biased inflation nozzle 722 fully biased transversely;
FIG. 34 is a partial perspective view of the machine 710 from above showing the inflatable web 26 engaged by sheet engagement device 618 and movably biased inflation nozzle 722 engaging the web before the machine is in operation;
FIG. 35 is the same view as FIG. 34, but showing the machine 710 in operation with inflatable web 26 advancing past the movably biased inflation nozzle 722, the nozzle pivoted to a first position;
FIG. 36 is the same view as FIG. 35, but showing the machine 710 in operation at a time later than in FIG. 35 and the movably biased inflation nozzle 722 pivoted to a second position (shown, for example, by block 727 pivoting to extend farther than as shown in FIG. 35);
FIG. 37 is a representative perspective view of a brake system 840;
FIG. 38 is a representative perspective view of a brake system 940; and
FIG. 39 is a representative schematic of dancer system 740.

Various aspects of the subject matter disclosed herein are described with reference to the drawings. For purposes of simplicity, like numerals may be used to refer to like, similar, or corresponding elements of the various drawings. The drawings and detailed description are not intended to limit the claimed subject matter to the particular form disclosed. Rather, the intention is to cover all modifications, equivalents, and alternatives falling within the scope of the claimed subject matter.

### DETAILED DESCRIPTION

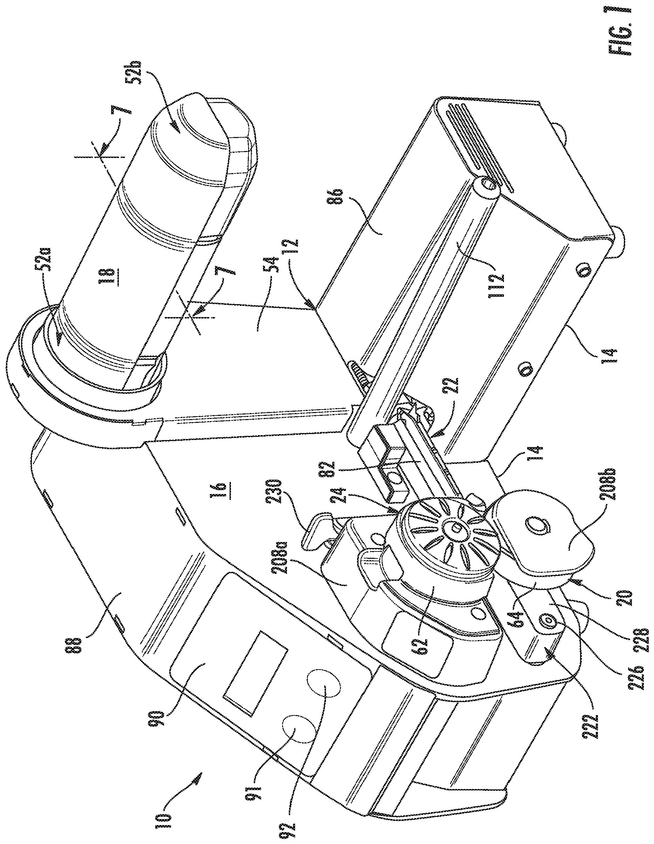

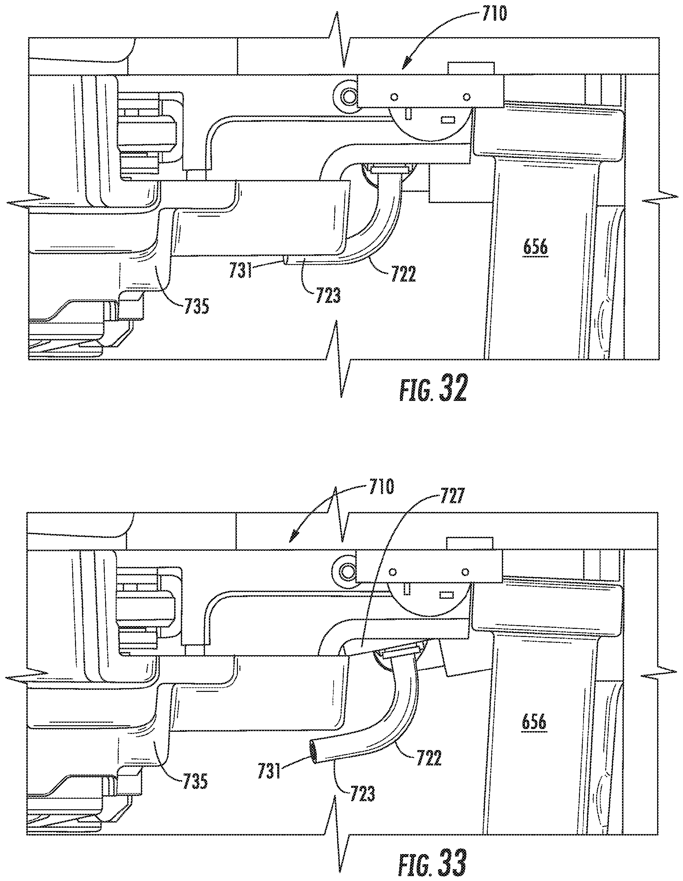

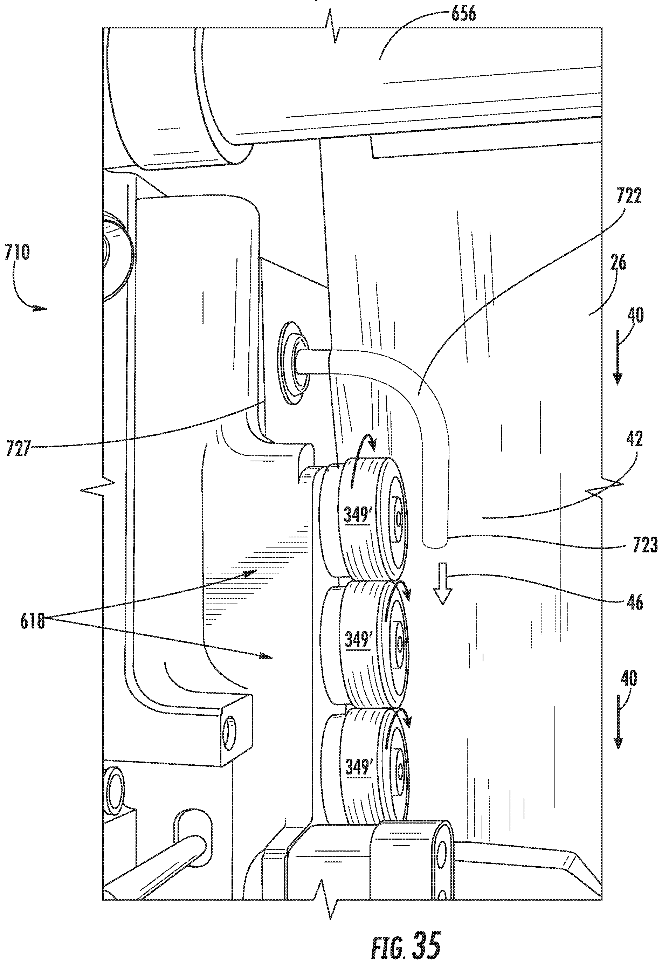

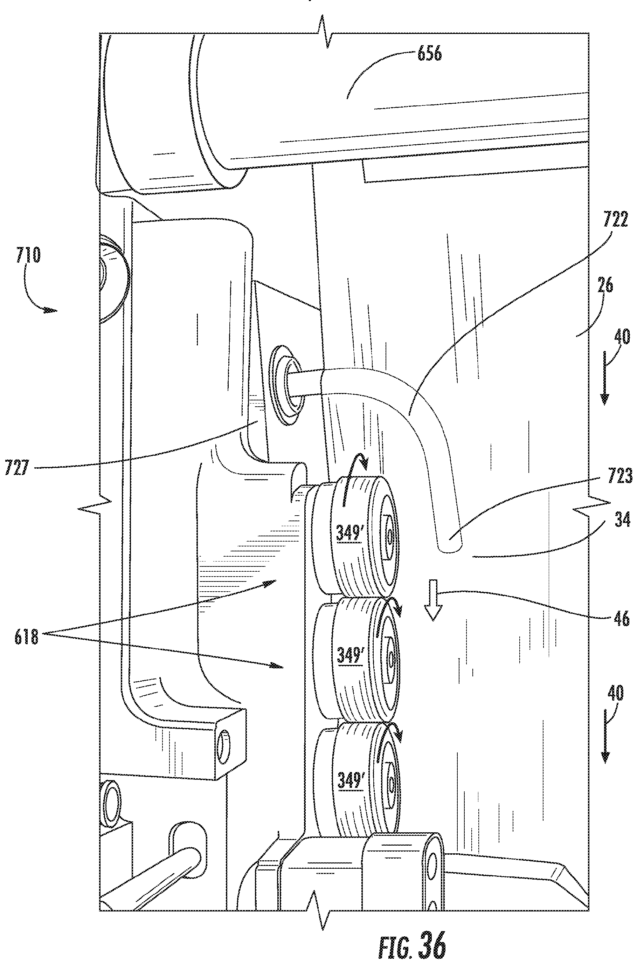

Machines 10, 310, 400, 510, 610, and 710 (FIGS. 1-5, 22, 17-18, 19-20, 23, and 30-36, respectively) illustrate embodiments of machines for inflating and sealing an inflatable web.

### Machine 10

Machine 10 includes a support structure 12, which may comprise a base 14 and a wall 16 extending upwards from the base. Machine 10 further includes a spool 18 for rotatively supporting a roll of the inflatable web, a web conveyance system 20 for conveying the inflatable web along a path of travel 40, an inflation system 22 for inflating the inflatable web (and the containers or chambers therein), and a sealing device 24 located proximate to the inflation system for sealing closed the inflated containers (i.e., chambers).

### Inflatable Web

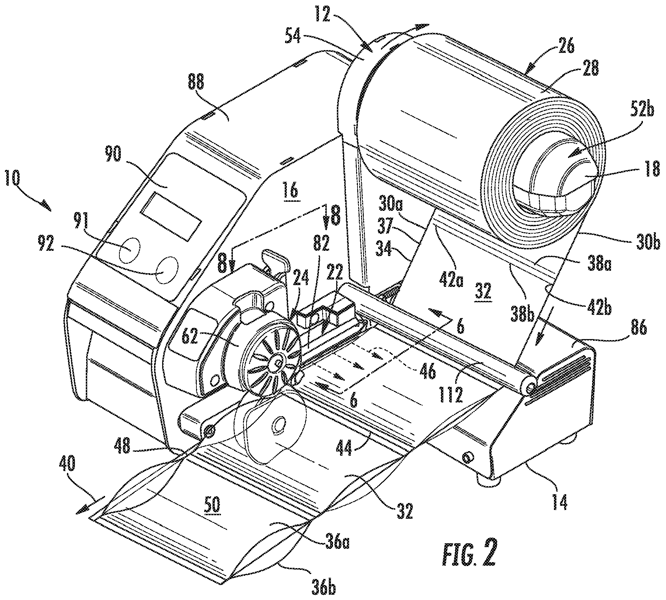

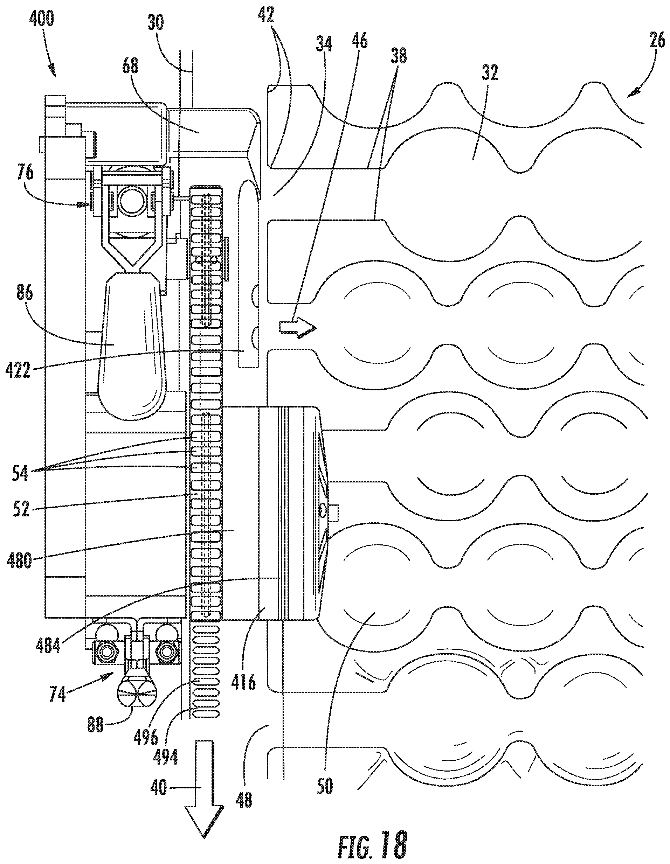

FIG. 2 illustrates machine 10 being used to inflate and seal an inflatable web 26. Web 26 is in the form of a roll 28, which is rotatively supported by spool 18. Web 26 has opposing first and second longitudinal edges 30a, b, and includes a series of inflatable containers 32. Each of the containers 32 is capable of holding therein a quantity of gas, e.g., air, and each has an opening 34 at the first edge 30a for receiving such gas. FIG. 18 illustrates inflatable web 26 in another configuration.

Web 26 may further comprise a pair of juxtaposed sheets 36a, b, e.g., film sheets. In the illustrated embodiment, first longitudinal edge 30a of the web 26 is open, i.e., unsealed, while second longitudinal edge 30b is closed, e.g., sealed or folded. The web conveyance system 20 conveys the inflatable web 26 along a path of travel 40, which is substantially parallel to the longitudinal edges 30a, b of the inflatable web.

The containers (i.e., chambers) 32 may be defined between sheets 36a, b and between a series of transverse seals 38. The seals 38 are described as "transverse" because they are aligned in a direction that is generally transverse to the longitudinal edges 30a, b of web 26 and path of travel 40. As shown in FIG. 2, the seals 38 may be arranged as relatively closely-spaced pairs 38a, b, such that each container 32 is defined in web 26 between a leading transverse seal 38a from a downstream pair of seals 38, and a following transverse seal 38b from an adjacent, upstream pair of such seals. Stated differently, i.e., from the perspective of the closely-spaced seal-pairs, the upstream transverse seal of each seal-pair is designated 38a while the downstream seal is designated 38b.

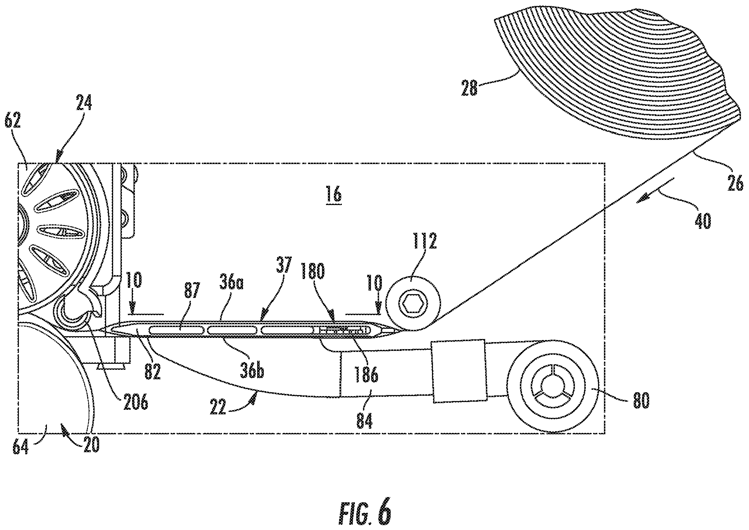

The openings 34 of the containers 32 are formed by the open first edge 30a of the web 26 and the first ends 42a of the transverse seals 38. The opposing second ends 42b terminate at the closed second edge 30b. The first ends 42a of the transverse seals are spaced from first edge 30a, in order to form a pair of opposing open (unattached) flanges in sheets 36a, b that form an 'open skirt' region 37, which allows inflation system 22, e.g., nozzle 82 thereof, to be accommodated within web 26, i.e., between film sheets 36a, b, in order to facilitate inflation, as disclosed, e.g., in U.S. Pat. No. 6,651,406, the disclosure of which is hereby incorporated herein by reference thereto (see, also, FIG. 6). In order to allow individual or groups of inflated containers to be separated from the web 26, a line of weakness 44, e.g., a perforated line, may be included between each container 32, i.e., between each upstream/downstream pair of transverse seals 38a, b as shown.

Inflatable web 26 may, in general, comprise any flexible film material that can be manipulated by the machines described herein (e.g., machines 10, 400) to enclose a gas or fluid 46 as herein described, including various thermoplastic materials, e.g., polyethylene homopolymer or copolymer, polypropylene homopolymer or copolymer, etc. Non-limiting examples of suitable thermoplastic polymers include polyethylene homopolymers, such as low density polyethylene (LDPE) and high density polyethylene (HDPE), and polyethylene copolymers such as, e.g., ionomers, EVA, EMA, heterogeneous (Zeigler-Natta catalyzed) ethylene/alpha-olefin copolymers, and homogeneous (metallocene, single-cite catalyzed) ethylene/alpha-olefin copolymers. Ethylene/alpha-olefin copolymers are copolymers of ethylene with one or more comonomers selected from C3 to C20 alpha-olefins, including linear low density polyethylene (LLDPE), linear medium density polyethylene (LMDPE), very low density polyethylene (VLDPE), and ultra-low density polyethylene (ULDPE). Various other polymeric materials may also be used such as, e.g., polypropylene homopolymer or polypropylene copolymer (e.g., propylene/ethylene copolymer), polyesters, polystyrenes, polyamides, polycarbonates, etc. The film may be monolayer or multilayer and can be made by any known extrusion process by melting the component polymer(s) and extruding, coextruding, or extrusion-coating them through one or more flat or annular dies.

As shown in FIG. 2, web conveyance system 20 advances web 26 along path of travel 40 beside wall 16, with the web being oriented such that the first edge 30a thereof is adjacent to the wall. Inflation system 22 is positioned to direct gas, as indicated by arrows 46, into the openings 34 of the containers or chambers 32 as the web 26 is advanced along the path 40, thereby inflating the containers.

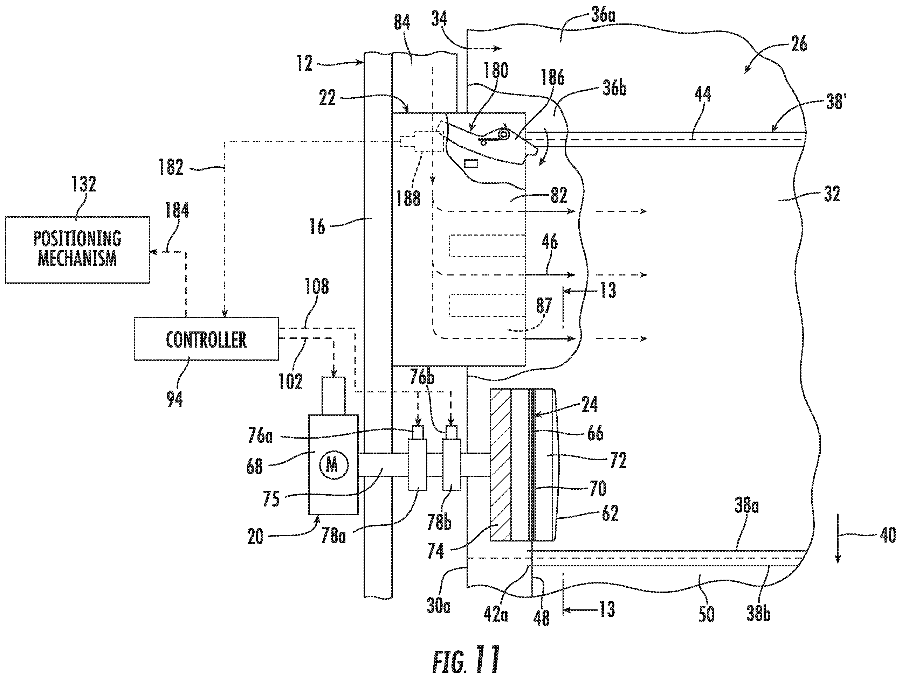

As also shown in FIG. 2, sealing device 24 may be positioned just downstream of the inflation system 22 so that it substantially contemporaneously seals closed the openings 34 of the containers 32 as they are being inflated (see, also, FIG. 11). Sealing device 24 may seal closed openings 34 by producing a longitudinal seal 48 between film sheets 36a, b, which also intersects transverse seals 38a, b near the first ends 42a thereof to enclose gas 46 within the containers 32. In this manner, the inflatable containers 32 of web 26 are converted into inflated containers 50 (i.e., inflated chambers 50).

### Spool

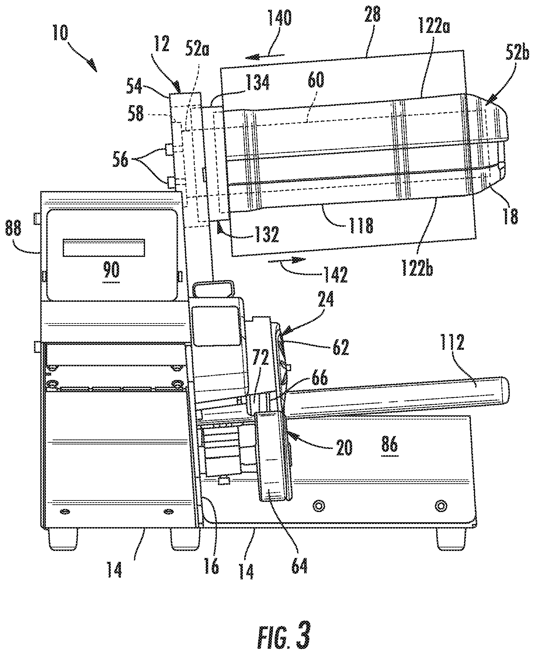

Referring to FIGS. 1 and 3, it may be seen that spool 18 has a proximal end 52a, at which the spool is attached to support structure 12, and may also have an opposing distal end 52b, which is spaced from the support structure. In the illustrated embodiment, e.g., as perhaps best shown in FIG. 3, the distal end 52b may have a higher elevation relative to the proximal end 52a, i.e., the spool 18 may have an upward angle (relative to a horizontal plane, e.g., to base 14) as the spool extends away from the wall 16. In this manner, when a web roll 28 is mounted thereon (shown in phantom in FIG. 3), the roll is gravitationally biased towards the support structure 12. Such upward angle of spool 18 may facilitate the manual act of loading a new web roll 28 onto the spool, as the upward angle is often more ergonomic for roll loading, and with gravity assisting in sliding the roll all the way onto the spool 18. The degree of elevation of the distal end 52b of spool 18 may be such that the upward angle of the spool relative to a horizontal plane is between about 1 to about 45 degrees, such as from about 2 to about 30 degrees, about 3 to about 20 degrees, etc. As an example, an upward angle of about 4 degrees above horizontal was found to be suitable.

For those embodiments in which the spool 18 has an upwardly-angled configuration, the resultant gravitational bias of the roll 28 towards the support structure 12 urges the first longitudinal edge 30a of the web 26 towards the web conveyance system 20, inflation system 22, and sealing device 24. The gravitational bias of roll 28 towards support structure 12 has the potential, therefore, to facilitate the reliability of machine 10 by improving the tracking of the open edge of web through the inflation and sealing operations. As will be described in further detail below, however, the inventors hereof found that further means are needed in order to provide proper alignment of the web, i.e., of open longitudinal edge 30a and/or first ends 42a of transverse seals 38, with the conveyance system 20, inflation system 22, and sealing device 24 in such a way that fully-sealed and consistently-inflated containers 50 are formed.

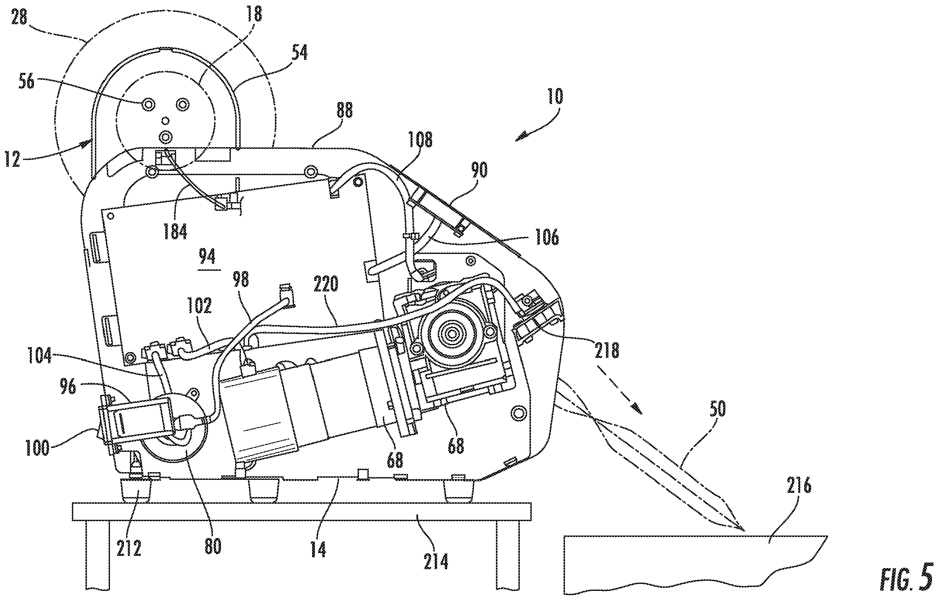

In order to accommodate the weight and diameter of a full roll 28, support structure 12 may include an upright structural bracket 54, to which spool 18 may be directly attached, e.g., via fasteners (screws) 56 and mounting plate 58 as shown in FIG. 3 (see also FIG. 5, wherein a total of three such fasteners 56 are shown). Mounting plate 58 may thus form the attachment point at which the proximal end 52a of spool 18 is secured to support structure 12. As will be described in further detail below, mounting plate 58 may be an integral part of an internal framework 60 for spool 18, to which the internal components thereof may be mounted. As shown, the upright bracket 54 may be secured to wall 16 of support structure 12, and may serve to elevate spool 18 such that there is sufficient space between the spool and base 14 to accommodate a roll 28 having a desired maximum, full-width diameter.

As illustrated in the drawings, the distal end 52b of the spool 18 is unsupported such that the spool is cantilevered from upright bracket 54 on wall 16. Alternatively, e.g., for large and/or heavy web rolls, the distal end 52b may be supported by a suitable structural component, e.g., an upstanding post with a cradle on which the distal end 52b rests.

The upward angle of spool 18 may be achieved as shown in FIG. 3 by orienting wall 16, and also upright bracket 54, at an angle relative to a vertical plane, with spool 18 being substantially perpendicular to the wall. Alternatively, wall 16 (and also bracket 54) may be oriented in a substantially vertical plane, with spool 18 mounted on the wall (and/or on bracket 54) at an upward angle relative to a horizontal axis passing through the vertical plane. As a further alternative, spool 18 may not have an upward angle, i.e., may have a substantially horizontal configuration.

### Sealing Device

As noted above, sealing device 24 seals closed openings 34 of containers 32 by producing a longitudinal seal 48 between film sheets 36a, b, which intersects transverse seals 38a, b near the first ends 42a thereof to enclose gas 46 within the containers. In this manner, the inflatable containers 32 of web 26 are converted into inflated containers 50.

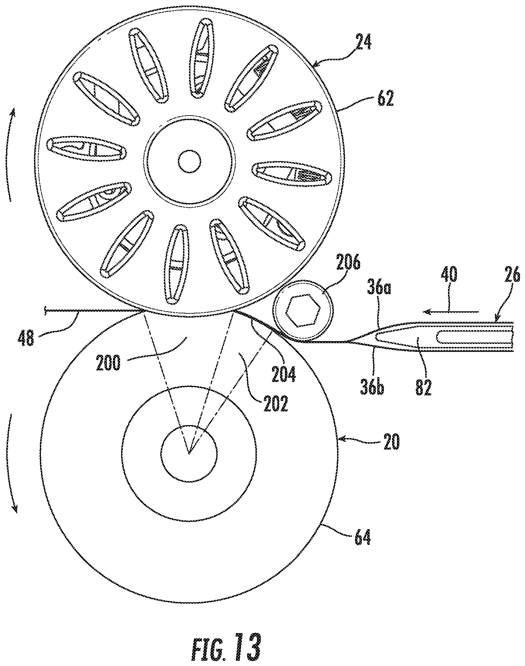

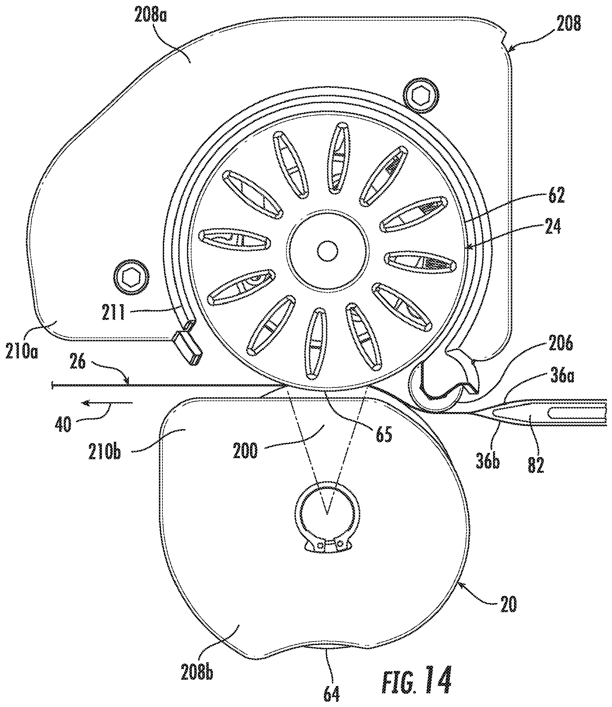

In the presently-illustrated embodiment, the sealing device 24 and web conveyance system 20 are incorporated together as an integrated assembly, which may include a pair of convergent, counter-rotating rotary members, e.g., rollers 62, 64, and a sealing element 66 secured to at least one of the rollers, e.g., to roller 62 as shown in FIG. 3. Rollers 62, 64 may be positioned such that a nip 65, i.e., an area of tangential contact, is formed therebetween (FIGS. 14-16). At least one of the rollers may be linked to a motor 68, e.g., a motor and gearbox assembly 68 as shown in FIG. 5, such that, when power is supplied to one or both rollers, the rollers rotate in opposing directions as indicated in FIG. 13 so that web 26 is advanced along path 40 when the web passes through the nip 65 between the rollers (FIGS. 2 and 14). Simultaneous with such web conveyance, sealing element 66 forms longitudinal seal 48 at the nip between rollers 62, 64 to close the openings 34 of the inflated containers 32/50 as web 26 is advanced along path 40 (FIG. 11).

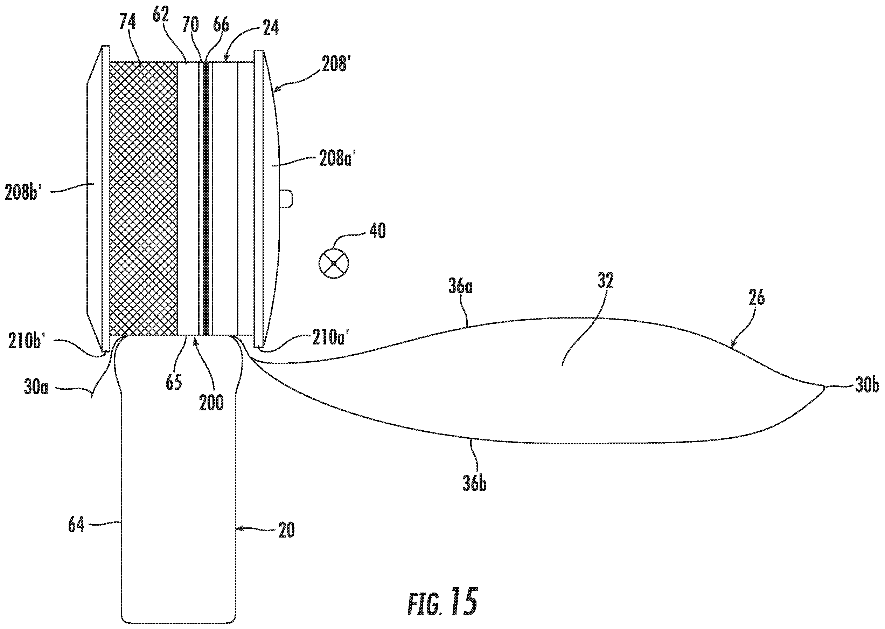

Sealing element 66 may be an electrically-heated resistive device, such as a band or wire, which generates heat when an electrical current passes through the device. As shown perhaps most clearly in FIGS. 11 and 15, it may be seen that sealing element 66 may be mounted on the circumferential outer surface 72 of roller 62, such that it rotates against the web 26 along with the roller 62. When sealing element 66 is mounted on roller 62 as presently illustrated, roller 62 may be considered a "sealing roller" while roller 64 is considered a "backing roller." When heated, the rotational contact between sealing element 66 and web 26, as rollers 62, 64 counter-rotate compressively against web 26, forms the longitudinal seal 48 as the web is conveyed along its path of travel 40.

In the illustrated embodiment, sealing element 66 is in the form of a wire. Sealing roller 62 may be formed from any material that is capable of withstanding the temperatures generated by the sealing element, such as metal (e.g., aluminum), high-temperature-resistant polymers (e.g., polyimide), ceramics, etc. A groove 70 may be provided in the circumferential outer surface 72 of roller 62 to accommodate sealing element 66 and keep it in proper position on the outer surface 72 during sealing and conveyance.

The outer surface 72 may include a roughened or knurled section 74 to facilitate traction between surface 72 and the web 26 in order to prevent or minimize slippage between the sealing roller 62 and the web as the roller rotates against the web to convey it along path 40. Web traction between rollers 62, 64 may further be facilitated by forming backing roller 64 from a pliant material, such as rubber or RTV silicone.

### Web Conveyance System

With particular reference to FIGS. 1-5 and 11, web conveyance system 20 may include rollers 62, 64, motor 68, and drive shaft 75, which extends through wall 16 to couple the rotational output of motor 68 to sealing roller 62. In this arrangement, sealing roller 62 is directly driven by motor 68 via drive shaft 75, while backing roller 64 is indirectly driven by the motor, based on its rotational contact with the driven roller 62. Sealing device 24 may, in addition to sealing element 66 and groove 70 on outer surface 72 of sealing roller 62, include commutators 76a, b (e.g., carbon-brush commutators) and corresponding slip-rings 78a, b (FIG. 11) in order to supply electricity to the sealing element 66 via internal wiring within drive shaft 75 and sealing roller 62.

Additional details regarding integrated web conveyance systems, sealing devices, and other components described herein are disclosed in one or more of U.S. Pat. No. 7,225,599; U.S. Pat. No. 8,991,141, and U.S. Pat. App. Publ. 2015/0075114 A1, each of which is incorporated herein in its entirety by reference.

As shown in FIGS. 2 and 11, longitudinal seal 48 is oriented in a direction that is substantially parallel to the longitudinal edges 30a, b of web 26 and its direction of movement along its travel path 40 through machine 10. Seal 48 may, as shown, be a continuous longitudinal seal, i.e., a substantially linear, unbroken seal, which is interrupted only when the sealing device 24 is caused to stop making the seal.

Alternatively, sealing device 24 may be adapted to produce longitudinal seal 48 as a discontinuous series of longitudinal seal segments. A discontinuous series of longitudinal seal segments may be produced when sealing element 66 has a helical pattern on surface 72 of sealing roller 62 (or 64), resulting in an angled configuration of the longitudinal seal segments, e.g., as disclosed in the above-referenced '599 patent. As a further alternative, sealing element 66 may be arranged on sealing roller 62 as an overlapping helical pattern, e.g., as a "double helix," as disclosed in U.S. Pub. No. 2008-0250753 A1, which is incorporated herein in its entirety by reference.

### Inflation System

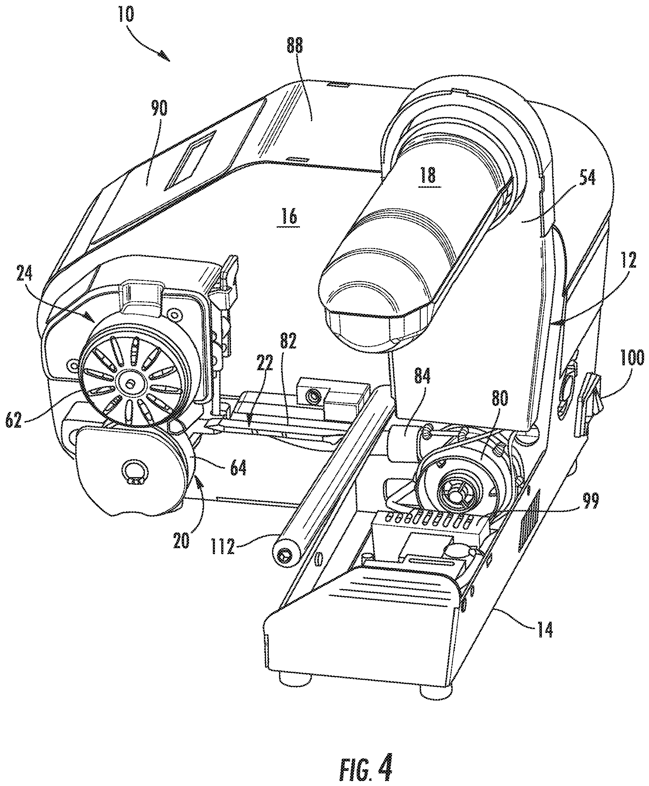

Gas stream 46 may comprise, for example, air. In this instance, inflation system 22 may include a blower 80 (FIGS. 4-6) for generating such gas stream 46 from the ambient air, an inflation nozzle 82, and a gas duct 84 to direct gas 46 from blower 80 to nozzle 82. In FIG. 4, blower cover 86 has been removed to show that blower 80 may be positioned on base 14 proximate nozzle 82 for maximum air delivery (i.e., minimum pressure loss) and speed. Nozzle 82 may be secured in position to direct gas (e.g., air) 46 into the openings 34 of the containers 32 via direct or indirect attachment to wall 16 and/or base 14. In the illustrated embodiment, nozzle 82 is attached to duct 84, and is further supported via attachment to wall 16.

FIG. 6 is a view of FIG. 2 along lines 6-6 thereof, and shows the conveyance of inflatable web 26 through inflation system 22, including the separation of film sheets 36a, b at open skirt region 37 to move against/around opposing surfaces of the inflation nozzle 82. FIG. 6 also shows that inflation nozzle may have a relatively flat/planar configuration, and may contain one or more gas outlets 87, e.g., three such outlets as shown.

Machine 10 may include a housing 88, e.g., on the opposite side of wall 16 from that with which the web-handling components (i.e., spool 18, inflation system 22, rollers 62, 64, etc.) are associated. The housing 88 may contain therein various operational devices, some of which are described above (e.g., motor 68), and some of which will be described below. Housing 88 may also contain thereon an operator interface, e.g., a control panel 90, which may include, at a minimum, a start button or switch 91 and a stop button or switch 92, which allows the operator of machine 10 to cause the machine to start operations and stop operations, respectively.

### Controller

Machine 10 (or any of the embodiments of the machines disclosed herein) may further include a controller 94 to control the overall operation of the machine. The controller may be contained within housing 88 as shown in FIG. 5. Controller 94 may be in operative communication with the various sub-assemblies of machine 10, inter alia, to control the flow of power, e.g., electricity, thereto. Such control may take place indirectly, e.g., by controlling the flow of power to the sub-assemblies from a separate power management source (not shown), or, as illustrated, directly. Thus, power may be supplied to controller 94 from junction box 96 via electrical cable 98. Junction box 96 may be supplied with power via a separate power cable (not shown), which connects the junction box to a power supply, e.g., a plug-in wall receptacle (not shown), which is linked to a source of electricity, and may include an 'on-off' switch 100, to energize and de-energize, respectively, controller 94. In one example, when the source of electricity is alternating current, e.g., 110 or 220 volt AC, a transformer 99 may be included in machine 10 (FIG. 4) to convert such AC current into DC current, e.g., 24 volt DC, prior to such current being supplied to controller 94 via cable 98.

Various additional electrical cables (e.g., insulated wires) may be provided to allow controller 94 to electrically communicate with the sub-assemblies in machine 10 in order to control the operations thereof. Thus, cable 102 may be supplied to allow controller 94 to communicate with motor 68, i.e., to control the web conveyance system 20 in order to achieve, e.g., a desired rate of web conveyance, a desired stoppage point, a desired re-start, etc. Similarly, cable 104 may allow controller 94 to communicate with blower 80, e.g., to energize/de-energize the blower, control the rate of movement of gas 46, etc. Cable 106 may provide communication between control panel 90 and controller 94, e.g., in order to allow an operator to supply commands, e.g., 'stop' and 'start' commands, to the controller. Cable 108 may provide communication between controller 94 and commutators 76a, b, i.e., to control the sealing device 24 by, e.g., energizing/de-energizing sealing element 66, controlling the amount of power supplied thereto, etc. Further sub-assembly control links are described below.

### Web Tension Control

With reference to FIGS. 2 and 6-7, a further feature will be described. When web 26 is in the form of a roll 28 as shown, the force required to withdraw the web from the roll by web conveyance system 20 may change as the roll is depleted, such that the tension in web 26 may vary as the roll depletes. Such variation in web tension can contribute to mis-alignment of the web vis-à-vis the inflation system 22 and sealing device 24. Such mis-alignment, in turn, can result in a number of inflation and/or sealing problems, including non-inflation of the containers, under-inflation of the containers, and seal failures, i.e., incomplete or no sealing of those containers that are inflated (resulting in the deflation of such containers). Accordingly, machine 10 may further include one or more tension-control devices for controlling the tension in web 26 as it is conveyed along path 40 through the machine. Such devices may operate by applying frictional resistance to the web 26 in opposition to the advancement thereof by conveyance system 20.

One such device is illustrated in FIG. 6, wherein, as shown, a tension rod or arm 112 may be positioned between roll 28 and inflation system 22, and may be structured and arranged to be in contact, e.g., sliding contact, with web 26 as it is conveyed along path 40. The sliding contact between tension rod 112 and web 26 provides frictional resistance to the web in opposition to its advancement along path 40. The magnitude of such frictional resistance is directly proportional to the extent of the contact between the web 26 and rod 112. In the illustrated arrangement, as the diameter of roll 28 decreases with depletion of its supply of web 26, the area of contact between web 26 and rod 112 increases, based on the increased angle of approach of the web onto the tension rod from roll 28. Conveniently, the tension rod 112 may also provide the function of a guide rod, in that it directs the web 26 into proper position on inflation nozzle 82. The tension rod 112 may have a substantially round or oval cross-sectional shape as shown. Various other shapes are, of course, possible, and within the scope of the present invention, e.g., square, rectangular, triangular, etc.

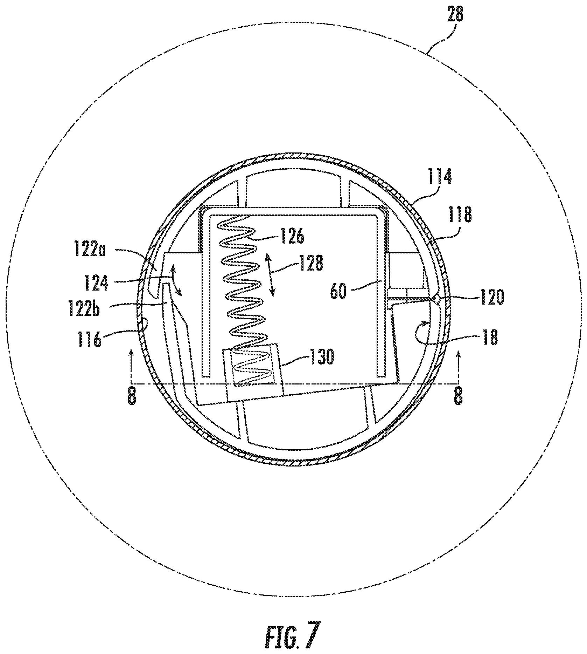

As an alternative, or in addition, to the tension rod 112, a further means for controlling the tension in web 26 may be included, as shown in FIG. 7. FIG. 7 is a cross-sectional view of spool 18 taken along lines 7-7 in FIG. 1, with roll 28 added in phantom for reference. Roll 28 may include a core 114 having an inner diameter 116, and spool 18 may include a contact surface 118, which may be the outermost surface of the spool. When a roll 28 is supported by spool 18, the contact surface 118 thereof is in contact with the inner diameter 116 of core 114. Spool 18 may be non-rotatably attached to wall 16/upright bracket 54 such that roll 28 rotates thereagainst, i.e., with the core 114 of roll 28 rotating frictionally against the contact surface 118 of spool 18, thereby applying frictional resistance to the advancement of web 26 by conveyance system 20.

In some embodiments, such frictional resistance may be increased by structuring and arranging spool 18 such that the contact surface 118 thereof exerts an outwardly-biased force against the inner diameter 116 of core 114. This may be accomplished by structuring spool 18 to be outwardly movable, e.g., along axial pivot member (e.g., hinge) 120 as shown in FIG. 7, with the spool 18 comprising a pair of sections 122a, b, which may move relative to each other in a clamshell fashion, e.g., arcuately in the direction of arrow 124, along pivot member 120. Thus, as illustrated, sections 122a, b may be separate and connected to one another substantially only along pivot member 120. Further, sections 122a, b may be biased away from one another by including a resilient member 126 inside of spool 18, which exerts an outwardly-biased force 128 against sections 122a, b. Such force 128 is manifested by sections 122a, b along arc 124, such that the contact surface 118 of spool 18 exerts the outwardly-biased force 128 against the inner diameter 116 of core 114. In this manner, the contact surface 118 exerts a frictional force against the rotation of the roll 28 as web 26 is conveyed through machine 10, which provides consistency to the tension in the portion of the web that is being conveyed through the machine.

In the illustrated embodiment, the resilient member 126 may be retained at one end in mounting boss 130 in 'lower' section 122b, with the opposing end pushing against 'upper' section 122a via contact with framework 60, to which section 122a may be attached such that lower section 122b is movable relative to support structure 12 while upper section 122a is stationary relative to the support structure. The resilient member 126 may comprise any object or device capable of exerting an outward force, such as one or more springs, foams, etc. As illustrated, member 126 is in the form of linear coil spring, but could also be a torsion spring, e.g., positioned at pivot member 120, a leaf spring, etc. As an alternative to the illustrated 'clamshell' configuration, sections 122a, b can be configured in a variety of other arrangements, e.g., such that the two sections are linearly (instead of pivotally) movable relative to one another. The spool 18 may have a constant outer diameter such that contact surface 118 is relatively uniform or, alternatively, may have a variable diameter such that the contact surface 118 is nonuniform.

If the foregoing structure for spool 18 is not needed for tension control, then spool 18 may, e.g., be rotatably mounted to the wall 16/upright bracket 54 such that the roll 28 rotates with the spool as the spool rotates relative to the wall/bracket.

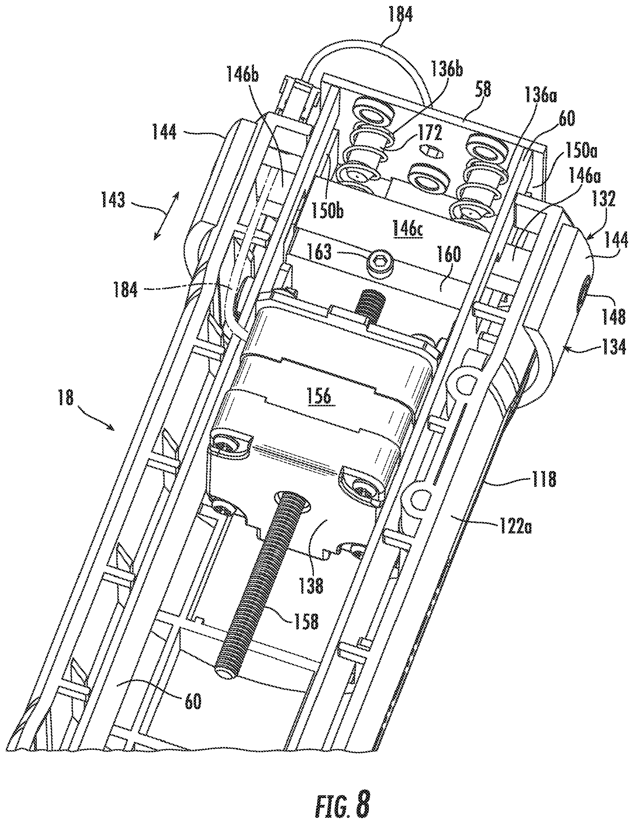

FIG. 8 is a perspective view of the inside of spool 18, as taken along lines 8-8 in FIG. 7 and with 'lower' movable section 122b pivoted fully away from 'upper' movable section 122a in order to show additional internal components that may be included in the spool. As noted above, spool 18 may include an internal framework 60, to which such internal components of the spool may be affixed, and a mounting plate 58, for attachment of the spool to upright bracket 54 (see, FIG. 3). Contact surface 118 may also be attached to framework 60 such that the contact surface is external to the framework. In the illustrated embodiment, the upper section 122a is directly attached to framework 60, while the lower section 122b is indirectly attached via its attachment to upper section 122a at pivot member 120.

### Web Positioning Mechanism

With collective reference now to FIGS. 3 and 8, in accordance with an advantageous feature of the invention, machine 10 may include a positioning mechanism 132, which is structured and arranged to establish a position of the roll 28 on spool 18. The positioning mechanism 132 may generally comprise an engagement member 134 and an actuator 138.

As shown in FIG. 3, engagement member 134 is interposed between the roll 28 and support structure 12 (upright bracket 54 thereof) at the proximal end 52a of spool 18. Engagement member 134 is adapted to engage roll 28, and is structured and arranged to be movable relative to spool 18, as indicated by the two-way arrow 143 (FIG. 8). Actuator 138 is structured and arranged to move engagement member 134 relative to the spool 18, e.g., bidirectionally as indicated by arrow 143. In this manner, the engagement member 134 and actuator 138 cooperatively establish the position of roll 28 on spool 18.

For those embodiments in which the distal end 52b of spool 18 has a higher elevation relative to the proximal end 52a, spool 18 has an upward angle (relative to a horizontal plane) as the spool extends away from upright bracket 54. In such embodiments, web roll 28 is gravitationally biased towards bracket 54 of support structure 12, as indicated by arrow 140, which represents the force vector of the gravitational bias that acts on roll 28 as mounted on angled spool 18. Based on the interposition of engagement member 134 between roll 28 and upright bracket 54, such gravitational bias 140 results in roll 28 being forced against the engagement member (i.e., by gravity).

Positioning mechanism 132 may further include a biasing element 136, e.g., a pair of biasing elements 136a, b as shown. Biasing elements 136a, b may be retained on or secured to mounting plate 58 as shown, e.g., via retainers 172 or the like, and may provide the function of biasing the engagement member 134 away from support structure 12/proximal end 52a of spool 18 and towards actuator 138/distal end 52b. When spool 18 has an upward angle as shown, such bias of engagement member 134 away from support structure 12 results in engagement member 134 exerting a force 142 against roll 28, which opposes the gravitational force 140 of the roll against the engagement member, plus any excess force applied by the roll during the loading thereof onto spool 18 (described in further detail below). The biasing element(s) 136 may comprise any suitable resilient device, such as a spring (as illustrated), foam, gas-filled bladder, etc.

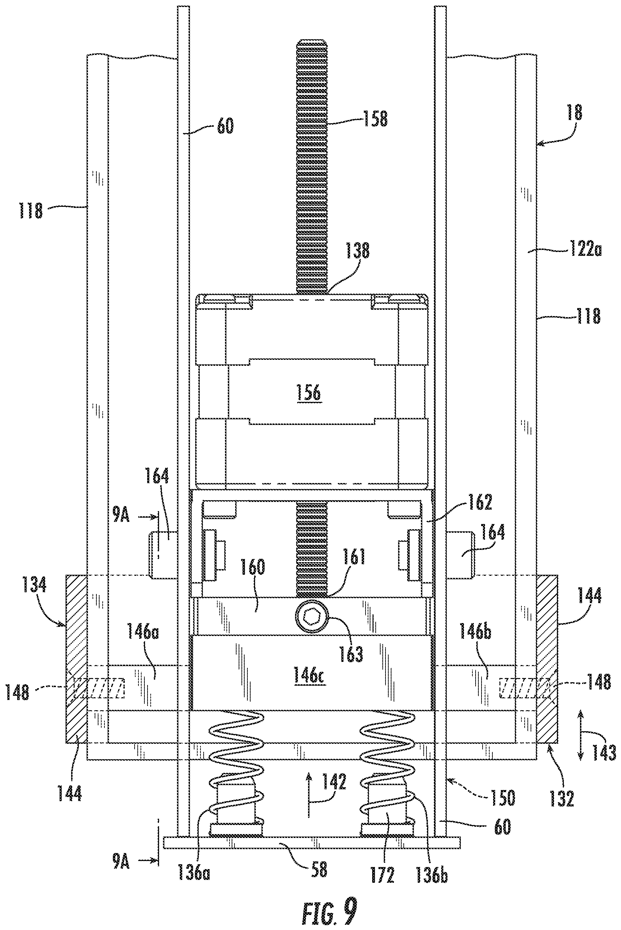

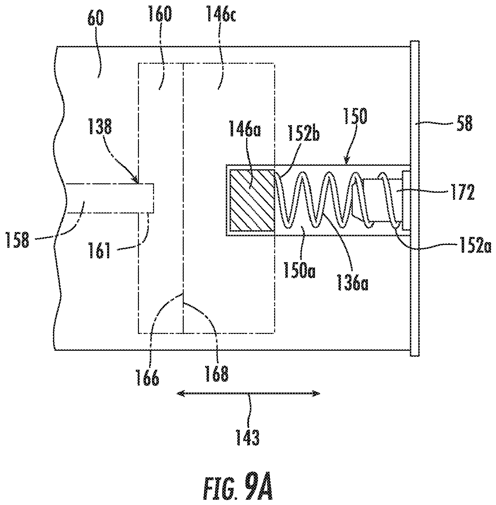

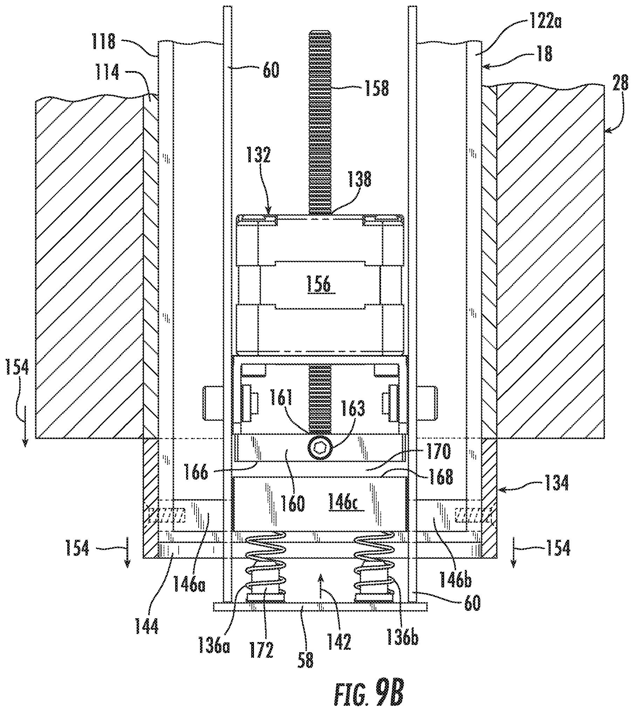

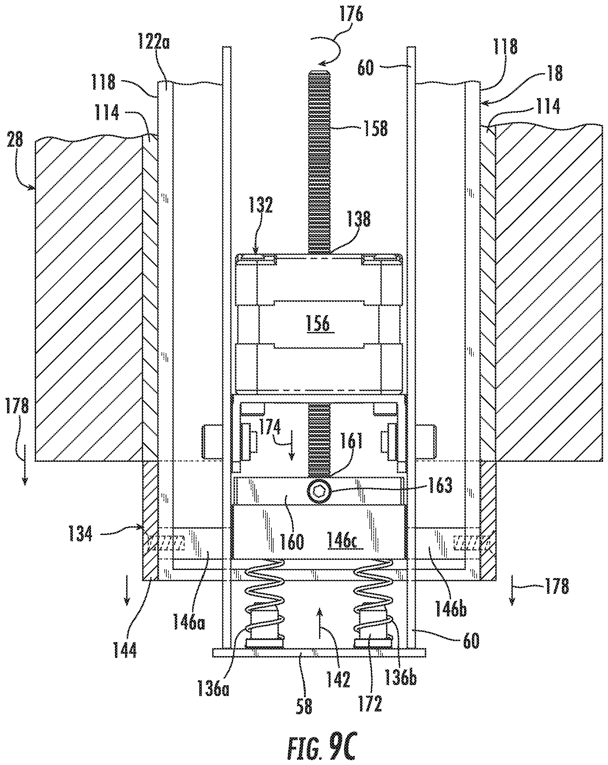

With additional reference now to FIGS. 9-9C, positioning mechanism 132 will be described in further detail. Engagement member 134 may comprise a contact ring 144 and a guide bar 146, with the contact ring 144 being attached to the guide bar via fasteners (e.g., screws) 148. Contact ring 144 is the portion of engagement member 134 that engages, e.g., is in physical contact with, roll 28 (FIG. 9B), and may be coaxial with spool 18 and external to contact surface 118 thereof (FIG. 8). Guide bar 146 may be structured and arranged to be linearly movable within a track 150, which may comprise a pair of opposing slots 150a, b in internal framework 60 (see, FIGS. 8 and 9A). Guide bar 146 may comprise a pair of 'wing' sections 146a, b, which extend from a center section 146c, with wing sections 146a, b riding in respective slots 150a, b and center section 146c moving within the internal framework 60. In this embodiment, track 150 thus constrains the movement of guide bar 146, and therefore of contact ring 144 attached thereto at wing sections 146a, b, to linear movement, i.e., in the form of translational movement along, and delimited by, slots 150a, b.

With reference to FIG. 9A, it may be seen that the biasing element(s) 136 may include a first end 152a and a second end 152b (only biasing element 136a is visible in FIG. 9A). The first end 152a exerts a force against support member 12, e.g., via mounting plate 58, which is attached to the support member. The second end 152b exerts an opposing force against guide bar 146, e.g., via direct contact therewith by second end 152b, and thereby biases the guide bar towards actuator 138 and distal end 52b of spool 18. When a roll 28 is supported on an upwardly-angled spool 18 as illustrated in FIG. 3, the biasing force exerted by the second end 152b of the biasing elements 136 on guide bar 146 will constitute the above-described force 142 exerted by engagement member 134 against roll 28, in opposition to the gravitational force 140 of the roll against the engagement member.

Excessive force may be applied when loading new film rolls onto the spools of the machine, such that the roll makes a rather hard impact with the machine at the proximal end of the spool. Such excessive force can damage the machine, particularly when repeated over time. It has been determined that such damage will most often be manifested at actuator 138, particularly if the actuator is rigidly coupled to engagement member 134, such that most of the roll's force is transferred to the actuator during the loading process.

Advantageously, the positioning mechanism 132 provides a solution to the foregoing problem, whereby engagement member 134 and actuator 138 may be configured such that the two components separate from one another when a force, e.g., as exerted by roll 28 on engagement member 134, exceeds a predetermined amount, which will generally occur when excessive force is applied during the roll-loading operation. This is illustrated in FIG. 9B, wherein a roll 28 is being loaded onto spool 18, causing force 154 to be exerted against the engagement member 134. Force 154 is the total of the force contributed by the operator (not shown) from loading roll 28 onto spool 18, plus gravitational force 140 when spool has an upward angle. FIGS. 9 and 9C illustrate two steady-state conditions of positioning mechanism 132. FIG. 9 shows the "pre-load" steady-state condition, i.e., prior to roll 28 being loaded onto spool 18. FIG. 9C illustrates the "post-load" steady-state condition, i.e., after roll 28 has been loaded onto the spool and the force 154 associated with such loading has dissipated. In both of such steady-state conditions, it may be seen that actuator 138 is in contact with engagement member 134. FIG. 9B illustrates a transitory state of positioning mechanism 132, i.e., the loading of roll 28 onto spool 18, during which the actuator 138 and engagement member 134 separate from one another, thereby separating the roll-loading force 154 from actuator 138, which prevents force 154 from damaging the actuator.

As noted herein, the function of actuator 138 is to move engagement member 134 relative to spool 18, to thereby establish the position of roll 28 on the spool. Actuator 138 may comprise a motor 156, a drive screw 158 extending through the motor, and a contact member 160 attached to a distal end 161 of the drive screw, e.g., via set screw 163 as shown, with the distal end 161 of drive screw 158 being embedded inside of contact member 160 (FIG. 9A) and set screw 163 securing the distal end 161 therein. The motor 156 may be secured to internal frame 60 via mounting bracket 162 and fasteners 164 (FIG. 9). In order to accurately position roll 28 on spool 18 for optimum inflation and sealing, motor 156 is preferably a precision-type motor, e.g., a rotary-to-linear motor capable of precise positioning, such as a stepper motor. Compared to, e.g., drive motor 68, precision motors such as motor 156 are relatively delicate and susceptible to damage from impact-type forces, e.g., as would be experienced from an excessive loading force being applied to roll 28. Such damage may be prevented by isolating the motor 156 from force 154, which may be achieved by configuring actuator 138 and engagement member 134 to separate from one another when a force, e.g., force 154 exerted by roll 28 on engagement member 134, exceeds a predetermined amount, e.g., biasing force 142.

In the illustrated embodiment, contact member 160 of actuator 138 and guide bar 146 of engagement member 134 have respective opposing surfaces 166, 168, which are shaped and relatively positioned to engage one another, i.e., to be in contact with one another, when positioning mechanism 132 is in a steady-state condition, i.e., either a pre-load (FIG. 9) or post-load (FIG. 9C) condition, but also to disengage from one another to form a gap 170 therebetween when a roll 28 is being forcefully loaded onto spool 18 such that the positioning mechanism 132 is in a transitory condition (FIG. 9B), i.e., with loading force 154 being applied to engagement member 134 such that the force 154 exceeds the opposing biasing force 142. In the illustrated embodiment, surfaces 166, 168 are both flat, but other shapes are possible, e.g., various three-dimensional shapes that disengageably conform to one another, such as a concave-convex relationship. By comparing FIGS. 9 and 9B, one can also see the movement of the entire engagement member 134 as a result of forceful roll loading, from its starting position in FIG. 9 to its displaced position along spool 18 towards mounting plate 58 in FIG. 9B due to loading force 154 being exerted on the engagement member, with the leading end of contact ring 144 extending beyond the corresponding end of section 122a of spool 18.

As noted above, biasing elements 136a, b may be included to provide the function of biasing the engagement member 134 away from support structure 12 (via mounting plate 58) and towards actuator 138. In the illustrated embodiment, the biasing force of biasing elements 136 and overall configuration of positioning mechanism 132 are such that, when positioning mechanism 132 is in a steady-state condition, i.e., either pre-load (FIG. 9) or post-load (FIG. 9C), the biasing elements 136 urge guide bar 146 into engagement, i.e., contact, with contact member 160, so that the respective surfaces 168, 166 thereof are pressed together. The amount of such biasing force 142 may thus define the predetermined minimum amount of force required to cause engagement member 134 to separate from actuator 138, and thereby produce gap 170, as shown in FIG. 9B. For example, when the force 154 exerted by roll 28 on engagement member 134, e.g., during loading, exceeds the biasing force 142 exerted by biasing elements 136 on the engagement member 134 against actuator 138 in the steady-state condition of positioning mechanism 132, actuator 138 and engagement member 134 separate from one another, thereby producing gap 170, as shown in FIG. 9B.

In the illustrated embodiment, the biasing elements 136 are in the form of springs, such that the biasing force 142 urging the guide bar 146 into engagement with contact member 160 in the pre-load and post-load steady-state conditions of the positioning mechanism 132 (FIGS. 9 and 9C) is a spring force. Alternatively, guide bar 146 and contact member 160 could be urged (disengageably held) together, e.g., via a mechanical or magnetic union.

During the transient state shown in FIG. 9B, loading force 154 temporarily exceeds the opposing biasing force 142, which had been holding respective surfaces 166, 168 of contact member 160 and guide bar 146 together. In this state, roll 28 and engagement member 134 are thus accelerating towards mounting plate 58/support structure 12, as propelled by the loading force 154. Such acceleration will not damage actuator 138, however, given that the entirety of the force 154 has been de-coupled from the actuator 138 as a result of the separation of the engagement member 134 from the actuator 138 during the loading process.

When included, biasing element 136, e.g., the pair 136a, b thereof, may advantageously provide the function of controlling the movement of roll 28 when actuator 138 and engagement member 134 are separated from one another. By biasing the engagement member 134 towards actuator 138, the biasing force 142 generated by biasing element 136 will preferably be sufficient to absorb at least some, e.g., a substantial amount or all, of force 154, to thereby control the movement of the roll 28 during the transitory phase of separation of actuator 138 from engagement member 134, e.g., by decelerating/dampening the movement of the roll 28/engagement member 134 along force vector 154 in order to stabilize the roll and engagement member, and then move the roll and engagement member along force vector 142 to re-establish contact between the engagement member 134 and actuator 138. In this manner, biasing element(s) 136 may restore machine 10 to a stable/operational run condition, with loading force 154 neutralized, by controlling the movement of roll 28 and returning positioning mechanism 132 to a steady-state position, i.e., the post-loading position as shown in FIG. 9C, in which the opposing surfaces 166, 168 of contact member 160 and guide bar 146 are once again held together by the biasing elements.

Referring now to FIG. 9C, the roll-positioning operation of positioning mechanism 132 in a steady-state 'post-loading' condition will be described in further detail. As noted above, the function of actuator 138 is to move engagement member 134 relative to spool 18 to thereby establish the position of roll 28 on the spool. As will be described below, the purpose of this is to ensure that the open longitudinal edge 30a and/or first ends 42a of transverse seals 38 of web 26 are optimally aligned relative to inflation system 22 and sealing device 24 for proper inflation and sealing of containers 32.

In the steady-state condition shown in FIG. 9C, following the transitory condition of roll-loading as shown in FIG. 9B, the surfaces 166, 168 of contact member 160 and guide bar 146 are once again held together by the biasing force 142 exerted against the guide bar by biasing elements 136a, b, so that actuator 138 and engagement member 134 resume engagement with one another. In order to move engagement member 134 in such steady-state condition to establish an optimal position of roll 28, actuator 138 is adapted to exert a force 174 against guide bar 146, which opposes the biasing force 142 exerted against the guide bar by the biasing element(s) 136. Actuator 138 may include any conventional drive means, including mechanical, electrical, and/or hydraulic drive means. As noted above, in the illustrated embodiment, actuator 138 is in the form of a linear actuator, including a motor 156, a drive screw 158 extending through the motor, and a contact member 160 attached to a distal end 161 of the drive screw, e.g., via set screw 163 as shown. The motor 156 is a rotation-to-translation type of motor, e.g., a stepper motor, and moves contact member 160 either towards or away from mounting plate 58/support structure 12, as indicated by double-headed arrow 143 (FIG. 9A), by generating clockwise or counter-clockwise rotation of drive screw 158.

An example of the operation of positioning mechanism 132 in a steady-state "post-loading" condition may be understood by viewing FIGS. 9, 9B, and 9C sequentially. FIG. 9 shows a starting position for the positioning mechanism, i.e., with no roll on spool 18 and the actuator 138 and engagement member 134 in contact with one another due to the force 142 exerted by the biasing element 136. FIG. 9B shows a transitory condition for positioning mechanism 132 when loading force 154 is applied to the positioning mechanism from loading roll 28 onto spool 18, resulting in the separation of engagement member 134 from actuator 138. During such separation, the position of the engagement member 134 changes from the starting position in FIG. 9 (moves towards mounting plate 58/support structure 12), but the position of the contact member 160 does not change, given that actuator 138 is not involved in the roll-loading process.

After steady-state has been restored by biasing element 136, with loading force 154 dissipated and the movement of roll 28 associated with force 154 eliminated, the positioning mechanism 132 is in a state of readiness to adjust the position of roll 28 on spool 18. In FIG. 9C, the positioning mechanism is in the process of making such an adjustment. The motor 156 is causing drive screw 158 to rotate in the direction of arrow 176, i.e., clockwise when viewed from behind the drive screw, which causes contact member 160 to apply force 174 against guide bar 146, such that contact member 160 and bar 146 both translate in the direction of the force vector 174 (towards mounting plate 58). By this action, it may be seen that the contact member 160 and guide bar 146 have both moved away from their starting position shown in FIG. 9, causing the entire engagement member 134 and roll 28 to similarly move, i.e., in the direction of arrow 178, towards mounting plate 58/support member 12. If conditions necessitate the roll 28 to be moved away from support member 12 (described below), motor 156 will cause drive screw 158 to rotate in the opposite direction as that of rotational arrow 176, and thus cause contact member 160 to translate in the opposing direction to that of force vector 174 (i.e., away from mounting plate 58). The force 142 exerted by biasing element 136 on guide bar 146 against contact member 160 will cause the guide bar, and thus the entire engagement member 134 and roll 28, to remain in contact with, and thus follow, the contact member away from mounting plate 58, i.e., in the opposite direction of arrow 178.

In view of the foregoing, it may now be appreciated that the engagement member 134, biasing element 136, and actuator 138 synergistically cooperate to control both the loading and precision-placement of web roll 28 on spool 18. The former serves to protect motor 156 during roll loading, which maintains the latter ability of the positioning mechanism 132 to accurately control the position of web roll 28, and thereby properly align web 26 as it is conveyed through machine 10.

### Web Tracking Sensor

Machine 10 may include a web tracking sensor 180, which is adapted to detect a transverse position of the inflatable web 26 with respect to inflation device 22 (FIG. 6). Information from the web tracking sensor 180 may be used to control the operation of the positioning mechanism 132 in order to establish a desired position of roll 28 on spool 18, to thereby maintain the transverse position of web 26 within a predetermined range for optimum alignment with inflation system 22 and sealing device 24.

In some embodiments, the web tracking sensor 180 may be structured and arranged to detect the transverse position of the web 26 by detecting the position of the open longitudinal edge 30a and/or the position of printed marks on the web, e.g., via a mechanical contact sensor, an optical sensor, an ultrasonic sensor, etc.

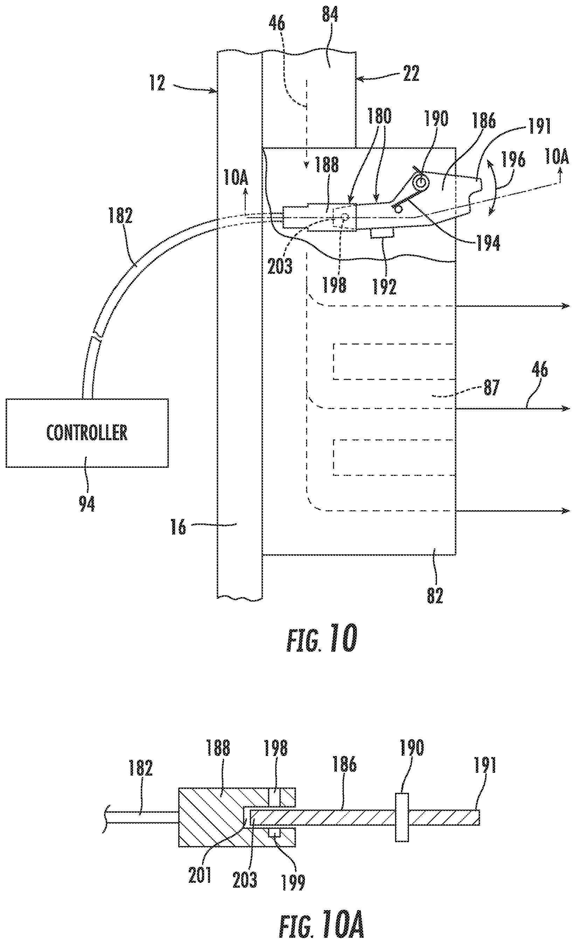

Alternatively or in addition, the tracking sensor 180 may be structured and arranged to detect the transverse seals 38, e.g., ends 42a or 42b thereof, such that a position of the transverse seals and/or the ends thereof indicates the transverse position of the web 26. For example, in the embodiment illustrated in FIGS. 10-11, the tracking sensor 180 is structured and arranged to detect first ends 42a of the transverse seals 38 via physical contact, such that the position of such first ends 42a indicates the transverse position of the inflatable web 26. Alternatively, the transverse seal ends 42a could be detected optically, i.e., via an optical sensor adapted to optically detect such seal ends.

Controller 94 may be in operative communication with both web tracking sensor 180, e.g., via input cable 182 (FIG. 10), and with positioning mechanism 132, e.g., via output cable 184 (FIGS. 5, 8 and 11). Controller 94 may further be adapted, e.g., programmed, to receive input 182 from tracking sensor 180 and, based on that input, send output 184 to positioning mechanism 132 to adjust the position of roll 28 on spool 18 so as to maintain the transverse position of the inflatable web 26 within a predetermined range, e.g., so that the first ends 42a of transverse seals 38 are neither too close nor too far away from tracking sensor 180, and thus in good alignment with inflation system 22 and sealing device 24 for proper inflation and sealing.

In the illustrated embodiment, tracking sensor 180 may be structured and arranged to be contacted by the first ends 42a of transverse seals 38. Tracking sensor 180 may thus comprise a contact sensor 186 and a detection sensor 188. Contact sensor 186 may be adapted to make physical contact with transverse seals 38 without impeding the movement of the web 26 along path 40. The contact sensor 186 may thus be movable, e.g., pivotable, translatable, bendable, etc., so that it moves upon contact with the transverse seals 38. In the illustrated embodiment, contact sensor 186 is pivotally mounted inside of inflation nozzle 82 at pivot point 190, with a contact portion 191 extending from nozzle 82 so as to make contact with transverse seals 38 in sequential fashion as web 26 is conveyed past the inflation nozzle. Contact portion 191 thus resides inside of web 26 during inflation and sealing operations, i.e., between sheets 36a, b at the openings 34 of the containers 32. Contact sensor 186 may be biased against pivot stop 192 by coil spring 194, and is thus pivotally movable along arcuate arrow 196 (FIG. 10).

The movement of contact sensor 186 serves two functions. First, by moving upon contact with the seals 38, the contact sensor 186 allows the web 26 to continue its conveyance along path 40 (FIG. 11). Preferably the movement is such that web conveyance continues without significant deviation due to the contact with the sensor. Secondly, the movement of the contact sensor 186 allows detection thereof by the detection sensor 188 in such a way that the transverse position of web 26 may be determined. The detection sensor 188 may, for example, be an optical sensor, including a light emitter 198 and a light receptor 199 (FIG. 10A), wherein light emitter 198 produces a beam of light, which is detect by light receptor 199, with emitter 198 and receptor 199 being spaced apart by gap 201. The contact sensor 186 and detection sensor 188 may be relatively arranged as shown in FIG. 10A, such that a tail portion 203 of contact sensor 186 is pivotally movable through gap 201 in detection sensor 188 as contact sensor 186 pivots about pivot point 190 through arc 196. Further, when the contact sensor 186 is in a neutral or resting position as shown in FIG. 10, i.e., with spring 194 urging the sensor against pivot stop 192 due to no contact between contact portion 191 and transverse seals 38, the tail portion 203 is positioned inside of detection sensor 188 such that the tail portion is interposed between light emitter 198 and light receptor 199, whereby the tail portion 203 prevents the light beam produced by emitter 198 from reaching receptor 199. In this position, the tail portion 203 may be said to 'break' such light beam, such that no light is detected by receptor 199. The detection sensor 188 may thus be configured to send signal 182 to controller 94 only when, and for so long as, light is detected by receptor 199, whereby such signal 182 is indicative of both the fact and duration of contact between transverse seals 38 and contact portion 191 of contact sensor 186.

In the illustrated embodiment, the incidence and duration of light detection by receptor 199, i.e., based on the movement of contact sensor 186 due to contact with transverse seals 38, provides an indication of the transverse position of web 26. Thus, for example, if no light is detected, this means that the ends 42a of transverse seals 38 are not making contact with contact sensor 186 because the ends 42a, and therefore web 26, are too far away from inflation system 22 and sealing device 24 for proper inflation and sealing of the web 26. In this case, controller 94 sends a command output 184 to positioning mechanism 132, to move the roll 26 on spool 18 in the direction of arrow 178, i.e., towards mounting plate 58/support member 12 (FIG. 9C), which causes web 26, and thus ends 42a of transverse seals 38, to move closer to inflation system 22 and sealing device 24.

In contrast, if periodic contact is made between the contact sensor 186 and ends 42a of the transverse seals, but the corresponding periodic duration of light detection by receptor 199 is above a predetermined value, this is an indication that the web 26 (transverse seals 38 thereof) are too close to inflation system 22 and sealing device 24. In such condition, the ends 42a of the transverse seals hold the contact sensor 186 pivotally away from its neutral/beam-breaking position (FIG. 10) for a duration of time that is greater than when the ends 42a are farther away from the sensor. The proper duration of light detection for correct positioning of the ends 42a, representing optimal alignment of web 26 for inflation and sealing, can be readily determined, e.g., empirically, by those having ordinary skill in the art of making and/or using inflation and sealing machines without undue experimentation. Once this value is determined, it can be programmed into controller 94. Thus, when a light detection duration occurs that exceeds the predetermined/pre-programmed value, controller 94 will send a command output 184 to positioning mechanism 132 to move the roll 26 in the opposite direction of arrow 178 (FIG. 9C), i.e., away from mounting plate 58/support member 12. This causes web 26, and thus ends 42a of transverse seals 38, to move away from contact sensor 186, inflation system 22, and sealing device 24.

As a further example, light may be detected by receptor 199 in intervals, indicating periodic contact between transverse seals 38 and contact sensor 186, but the duration of each period of light detection may be below the predetermined/pre-programmed value as described above. In this case, the web 26 is not so far away from inflation system 22 that the transverse seal ends 42a fail to make contact with contact sensor 186, but the web is still too far away for optimal alignment as indicated by the contact sensor 186 being held pivotally away from its neutral/beam-breaking position (FIG. 10) for a duration of time that is less than desired for a proper spatial relationship between the contact sensor 186 and the transverse seal ends 42a. In this case, like the 'no-contact' scenario described above, controller 94 sends a command output 184 to positioning mechanism 132, to move the roll 26 on spool 18 in the direction of arrow 178 (FIG. 9C), which causes web 26 to move closer to inflation system 22 and sealing device 24.

In a typical case, the transverse position of inflatable web 26 will oscillate within a range, centered on the predetermined/pre-programmed value for the periodic duration of light detection by receptor 199, which corresponds to the selected spatial relationship between the contact sensor 186 and the transverse seal ends 42a. Such predetermined range may be as narrow or wide as desired, e.g., depending on how controller 94 is programmed to run the resultant feed-back control loop. In this regard, various modes of control may be employed by controller 94, including proportional, derivative, integral, and combinations thereof, e.g., PID (proportional-integral-derivative) control, to achieve a desired predetermined range within which the transverse position of web 26 oscillates.

### Controller

Controller 94 may be in the form of a printed circuit assembly, e.g., a printed circuit board (PCB), and include a control unit, e.g., an electronic controller, such as a microcontroller, which stores pre-programmed operating codes; a programmable logic controller (PLC); a programmable automation controller (PAC); a personal computer (PC); or other such control device which is capable of receiving both operator commands and electronic, sensor-generated inputs, and carrying out predetermined, e.g., pre-programmed, operations based on such commands and inputs. Programming commands may be supplied to the controller 94 via control panel 90 or other type of operator interface, e.g., a wireless communication device.

Controller 94 may further be adapted, e.g., programmed, to determine the length of the containers 32 in any given inflatable web used with machine 10. With respect to the illustrated web 26, for example, the "length" is the longitudinal distance between a leading transverse seal 38a from a downstream pair of seals 38 and a following transverse seal 38b from an adjacent, upstream pair of seals 38, i.e., as measured parallel to the longitudinal edges 30a, b. The container length may be determined by controller 94 based on the rate at which web 26 is conveyed along path 40 by conveyance system 20, and upon the duration of the beam-break periods in web tracking sensor 180, in which the contact sensor 186 moves between transverse seals 38a, b within a container 32, and is thus in its neutral/non-contact position as shown in FIG. 10. The rate of web conveyance is a value that is stored in (i.e., "known by") controller 94, for example, based on operator input via control panel 90 (and thus the basis of output 102 from controller 94 to conveyance system 20).

The ability to determine container-length is advantageous, in that it allows the operations of selected sub-assemblies of machine 10 to be customized, based on the determined container-length in the web that is in use as the determination is made, in order to optimize the inflation and sealing of the containers in such web. For example, smaller containers often benefit from higher inflation rates vs. larger containers, and thus the speed of blower 80 may be varied based on the detected container-length.

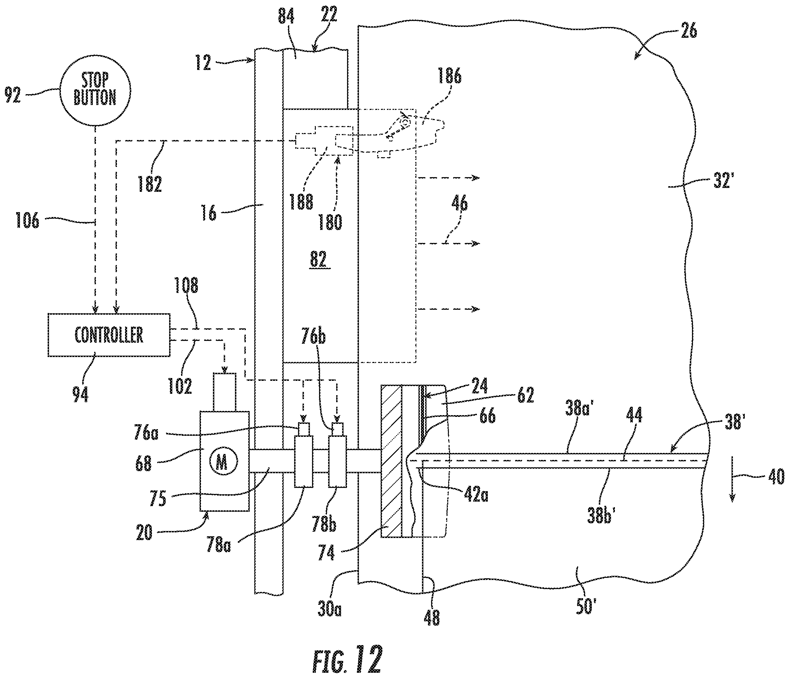

A related feature will be described with respect to FIG. 12, wherein controller 94 may further be adapted, e.g., programmed, to cause machine 10 to discontinue operations in such a manner that inconsistent inflation of containers 32 is avoided or at least minimized as a result of a 'stop-then-restart' event. In accordance with this embodiment of the invention, controller 94 may thus be configured and programmed to receive a stop command, e.g., from an operator via stop button 92 on control panel 90, and, based on input 182 from tracking sensor 180, send output 102 to web conveyance system 20 to stop conveying the inflatable web 26 such that the web stops at a predetermined location relative to a pair of the transverse seals 38 from adjacent containers, e.g., an un-inflated container 32 adjacent to an inflated container 50.

Using the depiction in FIG. 12 for illustration purposes, one example of a predetermined location at which conveyance system 20 may stop the conveyance of web 26 will be described. Such "predetermined location" may be one in which a pair of transverse seals 38, designated as 38' for illustration purposes, from adjacent containers, e.g., an un-inflated container 32' and an inflated container 50', arrive at and stop in a straddling position relative to sealing device 24. In this manner, the downstream container 50' associated with the downstream one 38b' of the pair of transverse seals 38' is fully inflated and sealed closed, with longitudinal seal 48 intersecting the transverse seal 38b' to seal closed the downstream/inflated container 50'. On the other hand, the upstream container 32' associated with the upstream one 38a' of the pair of transverse seals 38' is in position to be fully inflated by inflation system 22 and sealed closed by sealing device 24 upon receipt of a restart command, e.g., by the machine operator via start button 91 on control panel 90.

In FIG. 11, transverse seal pair 38' is making contact with contact sensor 186, and this event is being 'reported' to controller 94 via input signal 182 from detection sensor 188. The controller 94 thus 'knows' the location of the transverse seal pair 38', as well as its rate of conveyance between tracking sensor 180 and sealing device 24. Upon receipt of a stop command from stop button 92 (input signal 106 from control panel 90 - see FIG. 12), the controller 94 controls, e.g., slows, the rate of conveyance of web 26 via output signal 102/motor 68 such that the web stops just as transverse seal pair 38' has arrived at the straddling position shown in FIG. 12.

This feature advantageously ensures that the downstream container 50' is fully inflated and sealed closed, and that the upstream container 32' is in the correct position to be fully inflated and sealed closed upon a re-start of the machine, so that inconsistent inflation (e.g., under-inflation, over-inflation, or non-inflation) of the containers does not result from stop/re-start episodes.

### Feature to Reduce Wrinkling in Seal Zone

With reference now to FIG. 13, a further feature of the invention will be described. Due to the dynamic nature of conveying web 26 and inflating containers 32 therein on a continuous basis, irregularities frequently develop in the web, including wrinkling in one or both of the juxtaposed sheets 36a or 36b and relative movement therebetween in the vertical, lateral, and/or longitudinal (path 40) dimension. The inventors found that irregularities of this type lead to inconsistent formation of longitudinal seal 48, which results in the inability of inflated containers 50 to maintain gas pressure, i.e., the containers leak and go flat, making them wholly ineffective as cushions. The inventors discovered a solution to this problem, whereby sealing device 24 may include a seal zone 200 and an isolation zone 202. Isolation zone 202 is upstream from seal zone 200 along the path of travel 40. Advantageously, the isolation zone 202 is structured and arranged to substantially isolate the seal zone 200 from irregularities in the web 26 as it is conveyed along path 40, thereby improving the consistency and quality of the longitudinal seal 48 produced by sealing device 24.

As described above, sealing device 24 may comprise a pair of convergent members, e.g., a pair of counter-rotating rollers 62, 64, with sealing element 66 secured to at least one of the rollers, e.g., to roller 62 as shown. Alternatively, one convergent member may be rotary while one is stationary. In the illustrated embodiment, the seal zone 200 is located at a point of convergence between the convergent rollers 62, 64, i.e., with nip 65 being located within seal zone 200, while the isolation zone 202 comprises a segment 204 of one of the convergent members, e.g., backing roller 64, against which web 26 is directed (FIG. 13). Sealing device 24 may further comprise a deflection device 206, which is structured and arranged to intersect with path 40 in such a way that web 26 is deflected and directed against segment 204 as the web is conveyed along path 40, to thereby produce isolation zone 202.

By directing the web 26 against segment 204, the deflection device 206 tensions the web against such segment in the resultant isolation zone 202, which has the effect of dampening relative movement of sheets 36a, b, smoothing out wrinkles in web 26, and otherwise isolating such irregularities from the downstream seal zone 200. This has been found to greatly improve both the quality and consistency of longitudinal seal 48. In the illustrated embodiment, isolation zone 202 is angularly displaced from seal zone 200, and comprises a fixed segment 204, i.e., a fixed arc, of backing roller 64, through which the roller rotates as it comes into contact with web 26, due to the deflection thereof by deflection device 206. Roller 64 maintains contact with web 26 through seal zone 200, and then leaves contact with the web after rotating through the seal zone. The deflection device 206 may comprise a guide bar as shown, or any suitable device capable of deflecting the web onto backing roller 64, such that isolation zone extends from the deflection device 206 to seal zone 200.

### Web Guides

Referring now to FIGS. 14-15, a further aspect will be described. A problem that may occur with rotary sealing devices is web-wrap around one of the rollers. That is, the web will periodically remain adhered to one of the rollers, resulting in the entire web being caught up, i.e., wound up, in the roller, necessitating a machine shut-down to untangle the web from the roller. To help minimize this problem, sealing device 24 may further include one or more web guides 208 (FIG. 14) or 208' (FIG. 15). Advantageously, the web guides 208, 208' are structured and arranged to direct at least a portion of the web 26 away from seal zone 200 as the web is conveyed along path 40, in order to prevent the web from becoming entangled in the rollers 62, 64 as a result of the formation of longitudinal seal 48 by sealing device 24.

One embodiment is illustrated in FIG. 14, wherein web guides 208, e.g., a pair of such web guides 208a, b, one for sealing roller 62 and one for backing roller 64, respectively, direct web 26 away from seal zone 200 in a downstream direction along path 40. In this regard, it may be seen that at least a portion 210a, b of each respective web guide 208a, b is downstream from seal zone 200 along path 40, so that the web 26 is directed in a substantially linear path, e.g., a tangential, non-rotary path, which does not follow the rotation of either of the rollers 62, 64 away from seal zone 200. Alternatively or in addition, one or both of the web guides 208a, b, e.g., web guide 208a, may include a lateral segment 211 to direct web 26 away from seal zone 200 in a lateral direction, i.e., laterally away from sealing roller 62. As illustrated, lateral segment 211 extends from web guide 208a in a lateral direction relative to path 40. Although a pair of web guides 208a, b is illustrated, only one of the web guides, i.e., either 208a or 208b, may be employed if desired.

An alternative embodiment is shown in FIG. 15, wherein web guides 208', e.g., a pair of such web guides 208a' and 208b', one on each opposing side of sealing roller 62, direct web 26 away from seal zone 200 in a radial direction, i.e., radially away from sealing roller 62. In this regard, it may be seen that at least a portion 210a' and 210b' of each respective web guide 208a' and 208b' is radially spaced from seal zone 200 relative to sealing roller 62, such that web 26 is directed radially away from the seal zone 200, e.g., with downward angles relative to path 40. Although a pair of web guides 208a' and 208b' is illustrated, only one of the web guides, i.e., either 208a' or 208b', may be employed if desired. Further, the web guides 208 and 208' may be used together, i.e., in combination, or independently (as illustrated).

### Receptacle for Inflated Web

With reference back to FIG. 5, an additional feature of the invention will be described. FIG. 5 illustrates one mode of operation, wherein machine 10 may include surface supports, i.e., 'feet', 212, which are adapted to allow the machine to be mounted on a table 214 during operations. A receptacle 216 may be placed adjacent to table 214 as shown, such that completed containers 50 may be directed from machine 10 and into the receptacle, e.g., in order to generate a readily-available supply of the inflated/sealed containers for subsequent use. Machine 10 may thus further include a detector 218 adapted to detect the presence of a predetermined quantity of the inflated containers 50 in receptacle 216, e.g., a height of the inflated containers in the receptacle. Detector 218 may be in operative communication with controller 94, e.g., via input cable 220, and the controller may be adapted, e.g., programmed, to perform at least one of:
a) stopping operation of machine 10 once the predetermined quantity is detected; and
b) starting operation of the machine if such predetermined quantity is not detected.

In this manner, a predetermined quantity of inflated containers 50 may be maintained in the receptacle 216. Detector 218 may be an ultrasonic sensor or the like.

### Web-Threading Position

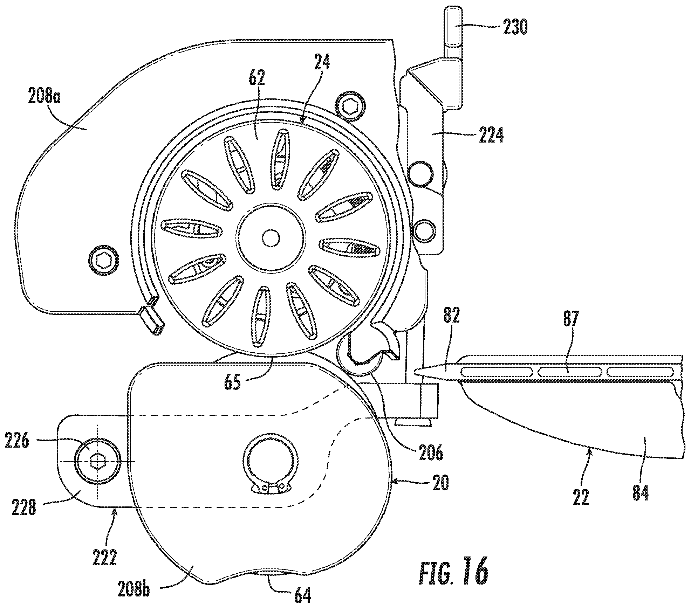

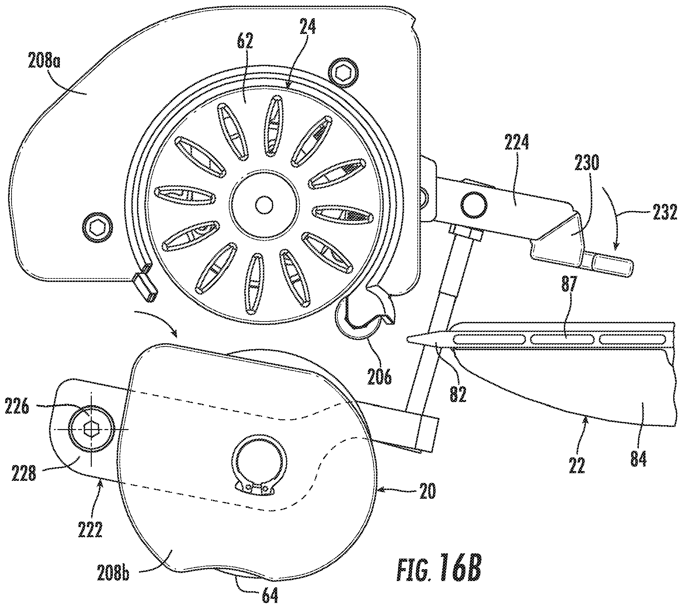

Finally, with reference to FIGS. 16A-16B, a further feature of the invention will be described. Web conveyance system 20 may comprise a pair of rotary members, e.g., rollers 62, 64, wherein at least one of the rotary members is mounted on a pivot mechanism 222 with an upstream actuator 224 and a downstream pivot point 226. The pivot mechanism 222 is movable between:
(1) a conveyance position (FIG. 16A), at which the rotary members/rollers 62, 64 are in contact with one another at nip 65, i.e., the point of convergence between the two rollers, and
2) a web-threading position (FIG. 16B), at which the rotary members/rollers 62, 64 are not in contact with one another.

In the illustrated embodiment, backing roller 64 is carried on pivot frame 228, which is pivotally mounted on support structure 12 at pivot point 226. Pivot mechanism 222 is a four-bar link mechanism, and includes a pivotally-movable handle member 230. When grasped and moved in the direction of arrow 232 (FIG. 16B), the handle member 230 of pivot mechanism 222 allows the backing roller 64 to be moved out of contact with sealing roller 62 to facilitate the placement of web 26 between such rollers, e.g., upon placement of a new roll 28 on spool 18 and subsequent 'threading' of the new web 26 through the above-described components of machine 10 along path 40. Once the threading is complete, the handle member 230 is moved in the opposing direction of arrow 232 in order to return the pivot mechanism 222 to its conveyance position as shown in FIG. 16A, so that the rollers 62, 64 are in compressive contact with opposing sides of web 26 and ready to begin withdrawing the web from the new roll and advancing the web along path 40.

The above-described arrangement, i.e., wherein the pivot point 226 is downstream and the actuator 224 is upstream, is beneficial because it has been found to be ergonomically easier to thread a new web 26 into machine 10 with such arrangement, e.g., in comparison with the inverse arrangement.

### Machine 400

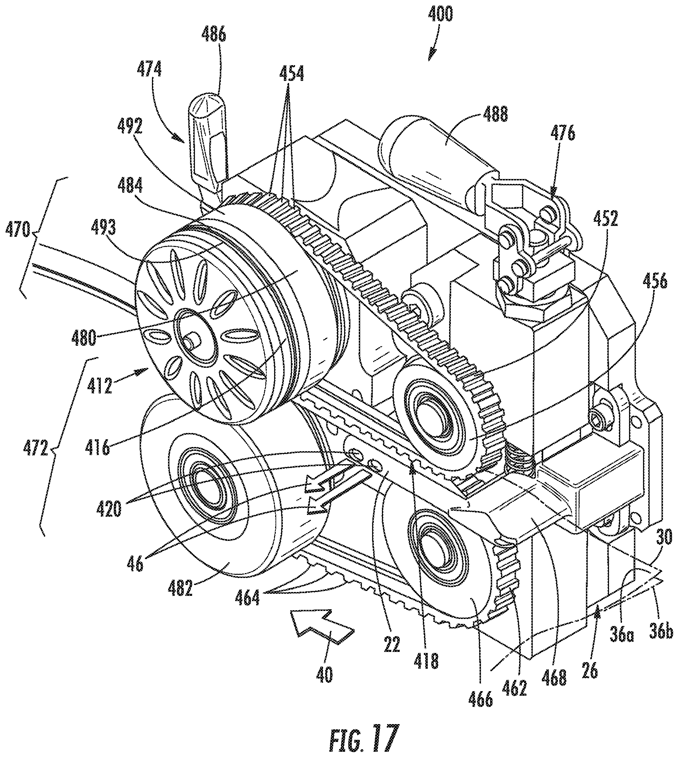

FIG. 17 illustrates machine 400 as another embodiment for inflating and sealing an inflatable web or inflatable structure 26. Machine 400 generally comprises a drive 412, an inflation nozzle 422, a sealing device 416, and a sheet engagement device 418. The drive 412 may comprise a drive roller 480 and a backing roller 482, which may be positioned such that a nip, i.e., an area of tangential contact, is formed therebetween when the drive roller and the backing roller contact. At least one of the rollers, such as the drive roller 480, may be linked to a motor to form the drive 412 such that, when power is supplied to the motor, the drive roller rotates. When the drive roller 480 is in contact with the backing roller 482, the backing roller may also rotate. As will be described in detail below, this may advance the inflatable structure 26. The outer surface 492 of the drive roller 480 may be roughened or knurled to facilitate traction with the inflatable structure 26 to minimize slippage as the drive roller rotates against the inflatable structure to advance the inflatable structure in a machine direction 40. To further facilitate advancing of the inflatable structure 26, the backing roller 482 may be formed from a pliant material, such as, e.g., rubber or RTV silicone. Other materials, e.g., metal with a knurled surface, may also be used for the backing roller 482 as desired, particularly when the backing roller is mounted to the machine 400 using a suspension system which ensures that the backing roller properly contacts the drive roller 480 and the sealing device 416 during operation.

The sheet engagement device 418 may be configured to engage a first sheet 36a and a second sheet 36b forming the inflatable structure 26 together along a longitudinal edge 30 of the inflatable structure. For example, the sheet engagement device 418 may comprise a first belt 452 defining a plurality of teeth 454, and an opposing second belt 462 defining a plurality of teeth 464. The first belt 452 may extend around the drive roller 480, and may additionally extend around an engaging roller 456. The opposing second belt 462 may extend around the backing roller 482, and may also extend around an opposing roller 466. Further, the plurality of teeth 454, 464 of the first belt 452 and the opposing second belt 462 may be oriented such that they face outwardly from a first external surface of the first belt and a second external surface of the opposing second belt such that they do not touch the respective rollers 480, 456, 482, 466 that they extend around. Instead, the plurality of teeth 454 from the first belt 452 may engage the plurality of teeth 464 from the opposing second belt 462 in an intermeshing manner. The sheet engagement device 418 may be rotationally coupled to the drive 412, such that when the motor rotates the drive, including the drive roller 480, the sheet engagement device also rotates, as will be described below. In alternate embodiments, instead of using a driver roller, the sheet engagement device may serve as the drive for the inflatable structure, with the two belts advancing the inflatable structure in the machine direction. In such embodiments, a non-rotary sealing device, such as a flat sealing bar and other similar known sealing devices may be used to seal the inflatable structure.

Although the pluralities of teeth 454, 464 are shown as being oriented generally perpendicular to the machine direction 40, the pluralities of teeth may be oriented in other directions, for example longitudinally, such that they generally align with the machine direction. In such a configuration, when one of the first belt 452 or the opposing second belt 462 has longitudinally oriented teeth, the other of the first belt and the second belt may comprise one or more longitudinally extending grooves. In such an embodiment the longitudinally extending teeth may engage the one or more longitudinally extending grooves. In alternate embodiments, one or both of the first external surface of the first belt 452 and the second external surface of the opposing second belt 462 may be untoothed.

The machine 400 may further include an inflation nozzle 422 for inflating the inflatable structure 26 with a fluid 46. The inflation nozzle 422 may be positioned such that the sheet engagement device 418 is adjacent to the inflation nozzle, which aids in inflation of the inflatable structure 26 as will be described below. The inflation nozzle 422 may take many different forms, with the location of the outlet(s) 420 of the inflation nozzle being an important design consideration. As described herein, the inflation nozzle 422 may be adjacent to the sheet engagement device 418, such as with the first belt 452 and the second belt 462 positioned between the nozzle 422 and the remainder of the machine 400. The machine may further comprise a plow 468, which separates the first sheet 36a of the inflatable structure 26 from the second sheet 36b of the inflatable structure. Such a plow 468 may comprise an integral portion of the nozzle 422, as illustrated in the machine 400 of FIG. 17, or alternatively, the plow may comprise a separate component of the machine. Alternatively, the nozzle 422 may comprise a tubular structure which separates the first sheet 36a and the second sheet 36b.

The machine 400 may further define an engaging assembly 470 and an opposing assembly 472. The engaging assembly 470 may comprise the drive roller 480, the sealing device 416, the engaging roller 456, and the first belt 452. The opposing assembly 472 may comprise the backing roller 482, the opposing roller 466, and the second belt 462. As shown in FIG. 17, the machine 400 may further include one or more release mechanisms 474, 476 to which all or a portion of the opposing assembly 472 and/or the engaging assembly 470 is mounted. The release mechanisms 474, 476 allow the opposing assembly 472 to be moved relatively toward and away from the engaging assembly 470. For instance, a first release mechanism 474 may displace the backing roller 482 from the drive roller 480 and sealing device 416, and conversely back into contact with the drive roller and sealing device. Similarly, a second release mechanism 476 may move the opposing roller 466 away from the engaging roller 456, and conversely back into contact with the engaging roller. The advantages resulting from the ability to relatively move the opposing assembly 472 away form the engaging assembly 470 will be described below.

The sealing device 416 may be integral with the drive roller 480, or comprise a separate roller, as shown. Further, the sealing device 416 may comprise a sealing element 484. The sealing element 484 may be a resistive element, which produces heat when electricity is supplied thereto, and can have any desired shape or configuration. As shown, the sealing element 484 is in the form of a wire. Thus, the sealing device 416 may be formed from any material that is capable of withstanding the temperatures generated by the sealing element 484, such as metal, e.g., electrically insulated aluminum; high-temperature-resistant polymers, e.g., polyimide; ceramics; etc. A groove 493 may be provided in the sealing device 416 to accommodate the sealing element 484 and keep it in proper position to seal the inflatable structure 26. Engaging assembly 470 having a sealing device 416 with a sealing element 484 may therefore engage the backing roller 482 from the opposing assembly 472 to seal the inflatable structure 26 which travels therebetween, as will be described in greater detail below.

FIG. 18 illustrates a top view of the machine 400 of FIG. 17 being used to inflate and seal an inflatable structure 26 (i.e., inflatable web). In the illustrated embodiment, the inflatable structure 26 has a longitudinal edge 30 and includes a series of pre-formed inflatable chambers or containers 32 formed between the first sheet 36a and the second sheet 36b (see FIG. 17). Each of the inflatable chambers 32 is capable of holding therein a quantity of fluid 46 (e.g., air) and each has an opening 34 at the longitudinal edge 30 for receiving such fluid. As illustrated in FIG. 18, the inflatable chambers 32 may be defined between transverse seals 38. The openings 34 of the inflatable chambers 32 are formed near the longitudinal edge 30 of the inflatable structure 26 at the ends 42 of the transverse seals 38. The ends 42 of the transverse seals 38 are spaced from the longitudinal edge 30, in order to accommodate the inflation nozzle 422 within the inflatable structure 26, i.e., between the sheets 36a, 36b (see FIG. 17), while the other ends of the transverse seals terminate at a closed edge. The closed edge could be either a fold forming the first sheet 36a and the second sheet 36b, such as when a single piece of film forms the inflatable structure 26, or the closed edge could comprise a seal between a separate first sheet and second sheet which have been joined together.

### Operation of Machine 400

To begin the operation, an inflatable structure 26 is fed between the engaging assembly 470 and the opposing assembly 472 (see FIG. 17) from, for example, a roll of the inflatable structure stored on a spool, such as any of the spools and the associated systems or features described herein. In some embodiments, one or more of the spool, engaging assembly 470, and opposing assembly 472 may form an angle with respect to horizontal such that the closed edge of the inflatable structure 26 sits at a higher elevation than the longitudinal edge 30 of the inflatable structure as the inflatable structure is advanced through the machine 400. In such embodiments the alignment of the longitudinal edge 30 with the machine direction 40 may be improved.

The feeding of the inflatable structure 26 between the engaging assembly 470 and the opposing assembly 472 may also be facilitated by using the release mechanisms 474, 476. As described above, the second release mechanism 476 may move the opposing roller 466 downwardly away from the engaging roller 456, and the first release mechanism 4 4 may move the backing roller 482 downwardly away from the drive roller 480 by a user grasping and moving a second handle member 488 and a first handle member 486, respectively (see FIG. 17). Thus, the first release mechanism 474 and the second release mechanism 476 may facilitate the feeding of an inflatable structure 26 between the engaging assembly 470 and the opposing assembly 472, for example, upon replacement of the roll of the inflatable structure on the spool and subsequent threading of the new inflatable structure through the above-described components of the machine 400 in the machine direction 40. Once the threading is complete, the first handle member 486 and the second handle member 488 are moved back to their operating positions as shown in FIGS. 17 and 18, so that the engaging assembly 470 and the opposing assembly 472 are in compressive contact with opposing sides of the inflatable structure 26 and ready to begin withdrawing the inflatable structure from the roll and advancing the inflatable structure in the machine direction 40.

As seen in FIG. 17, before the inflatable structure 26 travels between the engaging assembly 470 and the opposing assembly 472, the longitudinal edge 30 of the inflatable structure 26 is open, i.e., unsealed. This enables the first sheet 36a and the second sheet 36b to separate to locations on opposite sides of the plow 468 and around the nozzle 422 as the inflatable structure 26 is advanced in the machine direction 40. However, the first layer 36a and the second layer 36b are engaged together by the sheet engagement device 18 along the longitudinal edge 30 of the inflatable structure 26. This occurs as the drive roller 480 rotates and hence advances the inflatable structure 26 between the engaging assembly 470 and the opposing assembly 472 in the machine direction 40, with the inflatable structure being oriented such that the longitudinal edge 30 is adjacent to the machine 400.

The inflation nozzle 422 is positioned to direct fluid 46 into the openings 34 of the inflatable chambers 32 as the inflatable structure 26 is advanced in the machine direction 40, substantially parallel to the longitudinal edge 30, thereby inflating the inflatable chambers. By engaging the first sheet 36a and the second sheet 36b of the inflatable structure 26 together, the inflation of the inflatable chambers 32 may be facilitated as compared to an open edge. For instance, with an open edge, fluid which is directed toward openings in the inflatable structure may partially escape out through the open edge. Further, as the fluid is discharged from the nozzle 422, and also as the escaping fluid passes out through the open edge, the fluid may cause the sheets forming the edge to vibrate as a result of the "reed effect," which may result in undesirable noise production. Also, due to the vibrations, the openings to the inflatable chambers may not remain fully open during inflation. Thus, as a result of both the openings not being fully open and the ability of some of the fluid to escape out of the inflatable structure, a higher fluid pressure may be required to inflate the inflatable chambers. However, the use of a higher fluid pressure may not be desirable in some situations in that it may require more complex or expensive components to create the fluid pressure, and further, the increased fluid pressure may exacerbate the noise problem by increasing the vibrations.

Accordingly, the machine 400 herein described can facilitate more efficient inflation and/or reduce noise production by engaging the first sheet 36a and the second sheet 36b together along the longitudinal edge 30. This reduces the ability of the fluid 46 to escape through the longitudinal edge 30 and may further reduce any vibrations of the sheets 36a, 36b along the longitudinal edge. Thereby the openings 34 of the inflatable chambers 32 may remain more fully open, more fluid 46 may be directed toward the openings, and less noise may be produced. Further, as more fluid 46 travels through the openings 34 into the inflatable chambers 32 more easily, it may be possible to use a lower fluid pressure to inflate the inflatable chambers relative the desired final inflation pressure of the inflated chamber.

Various embodiments of a sheet engagement device 418 may be used, such as embodiments using toothed or untoothed belts, as described above. When toothed belts are used, such as the first belt 452 and opposing second belt 462 shown in FIGS. 17 and 18, the intermeshing of the pluralities of teeth 454, 464 may reduce a dimension of the longitudinal edge 30 of the inflatable structure 26 in the machine direction 40. The sheet engagement device 418 may also emboss the inflatable structure 26 along the longitudinal edge 30 with a plurality of protrusions 494 and indentions 496 corresponding to the intermeshing pluralities of teeth 454, 464. The contracting of the length of the longitudinal edge 30 in the machine direction 40 provides additional benefits because the rest of the inflatable structure 26 may also tend to shrink in length in the machine direction when the inflatable chambers 32 are filled, which can otherwise distort the openings 34 of the inflatable chambers such that they do not remain fully open. Thus, by contracting the length of the longitudinal edge 30, the openings 34 may remain more fully open, which further facilitates inflation of the inflatable chambers 32, as described above. In particular, by contracting the length of the longitudinal edge 30 by an amount roughly equivalent to the amount of shortening of length of the inflatable portion of the inflatable structure 26 in the machine direction 40, distortion of the openings 34 may be avoided. Additionally, embossing the longitudinal edge 30 further resists noise produced by the "reed effect" by eliminating the planar nature of the longitudinal edge as the longitudinal edge contracts in the machine direction 40.

In alternate embodiments, two belts with untoothed respective first and second external surfaces may be used. In such embodiments, the length of the longitudinal edge 30 of the inflatable structure 26 may not be affected. Additionally, such an embodiment may not emboss the inflatable structure 26, depending on the pressure applied by the belts to the inflatable structure. However, even when the inflatable structure 26 is not embossed, this embodiment may provide beneficial results. For example, the sheet engagement device 418 may extend in the machine direction 40 in such a manner that the untoothed first external surface of the first belt 452 and the untoothed second external surface of the opposing second belt 462 engage the inflatable structure 26 therebetween from a location prior to the point at which the inflatable chambers 32 pass the nozzle 422 until a point at which the inflatable chambers are sealed by the sealing device 416, as described herein. In such an embodiment, the first sheet 36a and the second sheet 36b may remain separated at the longitudinal edge 30 when they exit the machine 400 and may not have embossing thereon.

As also shown in FIG. 18, the sealing device 416 may be positioned just after the inflation nozzle 422 in the machine direction 40 so that it substantially contemporaneously seals closed the openings 34 of the inflatable chambers 32 as they are being inflated. Thus, when heated, the rotational contact between the sealing element 484 and the inflatable structure 26 as the drive roller 480 and the backing roller 482 counter-rotate against the inflatable structure 26 forms a longitudinal seal 48 as the inflatable structure is advanced in the machine direction 40. Thereby the sealing device 416 may seal closed the openings 34 by producing a longitudinal seal 48 between the first sheet 36a and the second sheet 36b (see FIG. 1), which also intersects the transverse seals 38 near the ends 42 thereof to enclose the fluid 46 within the inflatable chambers 32. In this manner, the inflatable chambers 32 of the inflatable structure 26 are converted into inflated inflatable chambers 50 (i.e., inflated chambers or containers 50). The longitudinal seal 48 may be a continuous seal, i.e., a substantially linear, unbroken seal, which is interrupted only when the sealing device 416 is caused to stop making the seal, or it may form a discontinuous seal. The shape and pattern of the longitudinal seal 48 will depend on the shape and pattern of the sealing element 484, and thus various different seals may be produced as will be apparent to one of ordinary skill in the art.

### Machine 510

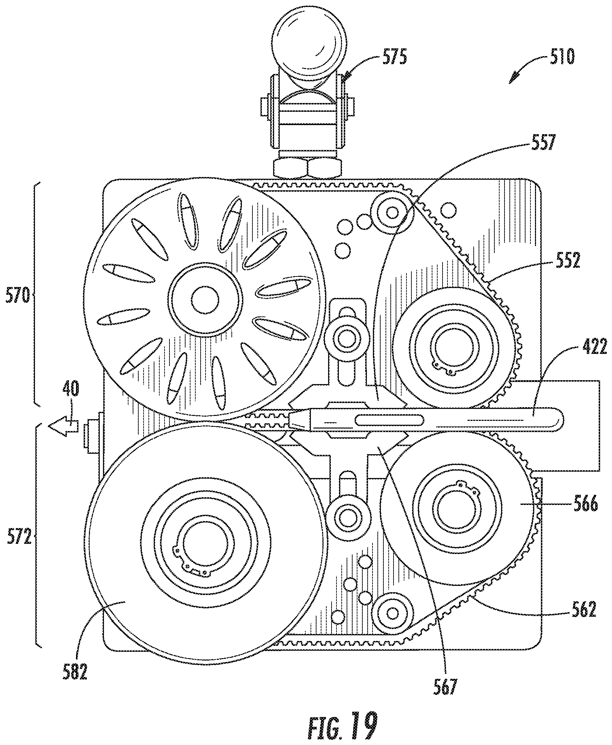

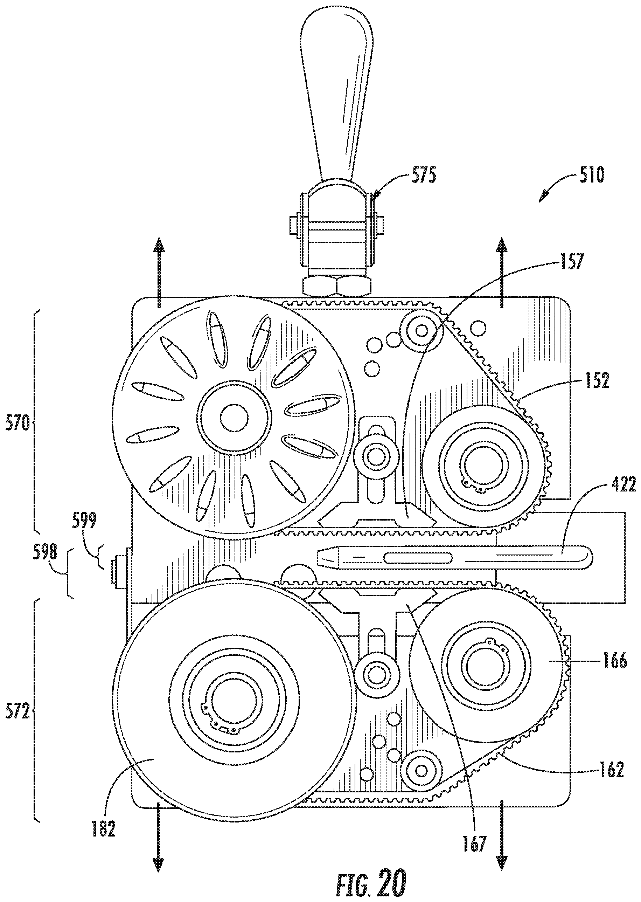

FIGS. 19 and 20 illustrate machine 510 as another embodiment of a machine for inflating and sealing an inflatable structure. The machine 510 of FIGS. 19 and 20 is similar to machine 400 of FIGS. 17 and 18, with three distinctions. The first such difference is that the machine 510 of FIGS. 17 and 18 additionally comprises an engaging body 557 and an opposing body 567. The engaging body 557 and the opposing body 567 may be part of the engaging assembly 570 and the opposing assembly 572, respectively. Further, the engaging body 557 and the opposing body 567 may be configured to engage the first belt 552 and the opposing second belt 562 therebetween. Additionally, the engaging body 557 and the opposing body 567 may engage the first belt 552 and the opposing second belt 562 at a position such that the engaging body, the opposing body, and the inflation nozzle 422 overlap in the machine direction 40. Such positioning assists in the engagement of a first sheet together with a second sheet along the longitudinal edge of an inflatable structure, which can further facilitate the inflation of inflatable chambers by further resisting fluid flow out the longitudinal edge. While the engaging body and the opposing body are illustrated in FIGS. 19 and 20 as fixed structures that do not rotate, in other embodiments either or both of the engaging body and the opposing body may comprise a roller or other rotary structure. Additionally, either or both of the engaging body and the opposing body may be spring loaded such that the opposing body and the engaging body compress the belts and sheets therebetween under the resulting spring force during operation.

The second difference from the embodiment of FIGS. 17 and 18 is that there is a single release mechanism 575 which relatively displaces the opposing assembly 572, including the backing roller 582, the opposing body 567, and the opposing roller 566 from the engaging assembly 570. A third difference is that the single release mechanism 575 also displaces the inflation nozzle 422 from the engaging assembly 570. In particular, as seen in FIG. 20, the opposing assembly 572 may be displaced from the engaging assembly 570 by a displacement distance 598, and the inflation nozzle 422 may be displaced from the engaging assembly by an intermediate displacement distance 599 which is less than the displacement distance. In such an embodiment, feeding of a first sheet and a second sheet of an inflatable structure on opposing sides of the nozzle 422 may be facilitated. For instance, when the intermediate displacement distance 599 is set to be half of the displacement distance 598, the inflation nozzle 422 may be positioned half way between the engaging assembly 570 and the opposing assembly 572. Thus, the first sheet and the second sheet of an inflatable structure may be more easily fed over the inflation nozzle 422 and between the engaging assembly 570 and the opposing assembly 572. At this point the single release mechanism 575 may then be used to move the inflation nozzle 422 and opposing assembly 572 to the normal operating position, as shown in FIG. 19.

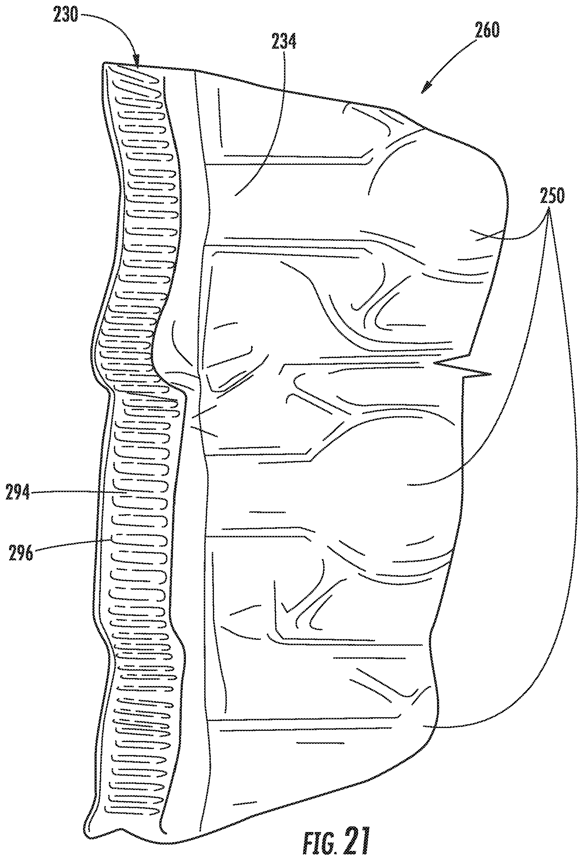

As the result of passing the inflatable web through a machine for inflating an inflatable structure, such as the machines disclosed herein (e.g., machine 400 and machine 510), an inflated structure may be produced. As seen in FIG. 21, inflated structure 260 may comprise a first sheet and a second sheet (see, e.g. FIG. 17), an embossed longitudinal edge 230, and a series of inflated chambers 250 formed between the sheets, each of the inflated chambers holding therein a quantity of a fluid and having a sealed opening 234 proximate the embossed longitudinal edge. As may be apparent to one having ordinary skill in the art, the inflatable structure 260 may comprise more than two sheets in other embodiments, and the sheets may also comprise separate layers of a single piece of flexible material. Further, although the embossed longitudinal edge 230 is shown as comprising protrusions 294 and indentations 296 which are perpendicular to the longitudinal edge 230, the protrusions and/or indentations may be oriented in any other direction, as previously described.

### Machine 310

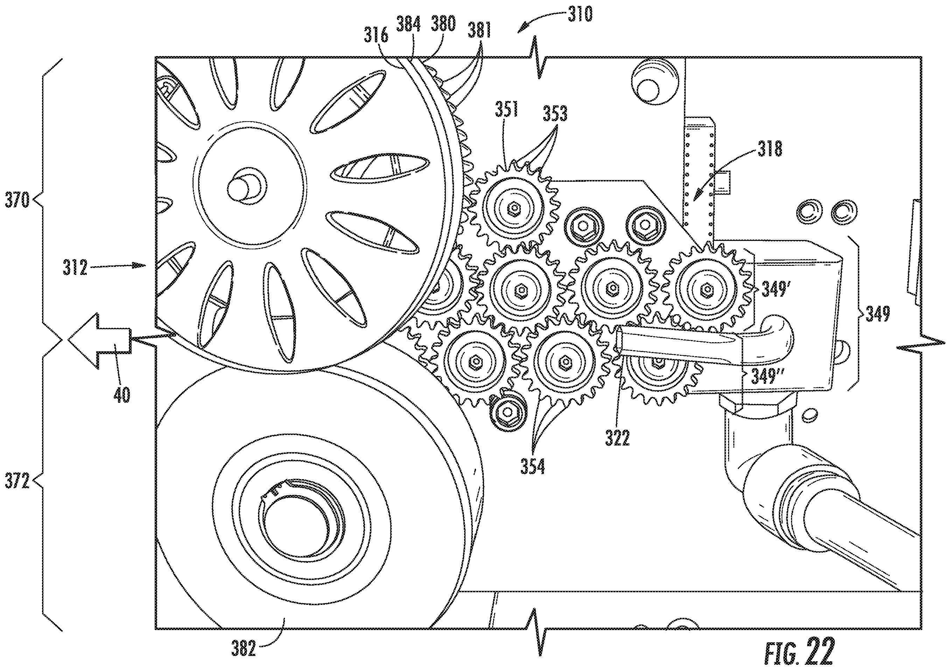

FIG. 22 illustrates machine 310 as an alternate embodiment of a machine for inflating and sealing an inflatable structure, wherein the sheet engagement device 318 comprises one or more engagement rollers 349 which may be used to engage the sheets of the inflatable structure. The engagement rollers 349 may comprise a first plurality of rollers 349' positioned on one side of the sheets and a second plurality of rollers 349" positioned on an opposite side of the sheets when the inflatable structure is passed through the machine 310. Thus, the first plurality of rollers 349' may intermesh with the second plurality of rollers 349" and thereby reduce a dimension of the longitudinal edge in the machine direction 40 as the inflatable structure moves along a tortuous path between the first plurality of rollers and the second plurality of rollers. In some embodiments, the intermeshing and/or contracting of the length of the longitudinal edge may be facilitated by one or more of the engagement rollers 349 having teeth 354. As with previous embodiments, contracting the length may further comprise embossing the longitudinal edge of the inflatable structure.

Additionally, the drive 312 in this embodiment may be rotationally coupled to one or more of the engagement rollers 349, such as through use of a transmission roller 351, which rotationally connects the drive 312 to one or more of the engagement rollers 349. The movement of the inflatable structure may act to rotationally connect all of the engagement rollers 349 when one of the engagement rollers is driven. Rotationally connecting the drive 312 to the engagement rollers 349 may be useful to prevent unintended tearing of the inflatable structure at perforations in the inflatable structure during inflation, whereas rotationally connecting the drive to the engagement rollers may not be needed when the inflatable structure does not have perforations or other separation facilitating structures. In the embodiment illustrated in FIG. 22, the drive roller 380 of the drive 312 may be provided with teeth 381, which mesh with teeth 353 on the transmission roller 351 when the engagement rollers 349 also have teeth 354.

The speed at which the engagement rollers 349 advance the inflatable structure may be different from the speed at which the drive 312 attempts to advance the inflatable structure. In particular, the engagement rollers 349 may advance the inflatable structure at a slower speed than the drive 312 attempts to advance the inflatable structure, such that the drive slips slightly with respect to the inflatable structure. This creates tension in the inflatable structure between the drive 312 and the engagement rollers 349, which may further assist in inflating the inflatable structure as described above. The speed at which the engagement rollers 349 advance the inflatable structure may be adjusted relative to the speed at which the drive 312 attempts to advance the inflatable structure by changing the radius to which the teeth 381 extend relative to the radius of the portion of the drive roller 380 which contacts the inflatable structure. For example, when the teeth 381 extend to a smaller radius than the radius of the portion of the drive roller 380 which contacts the inflatable structure, the engagement rollers 349 will advance the inflatable structure at a rate which is slower than the rate at which the drive 312 attempts to advance the inflatable structure. Regardless of the configuration of the drive 312, the first sheet of the inflatable structure may be separated from the second sheet of the inflatable structure such that the first sheet and the second sheet advance on opposite sides of the inflation nozzle 322.

As in other embodiments described herein, the machine 310 may define an engaging assembly 370 and an opposing assembly 372 with the drive 312 advancing the inflatable structure therebetween. A release mechanism such as those described herein may be configured to displace at least a portion of the opposing assembly 372 from the engaging assembly 370 by a displacement distance. Similarly to above, the release mechanism may also be configured to displace the inflation nozzle 322 from the engaging assembly 370 by an intermediate displacement distance which is less than the displacement distance. In some embodiments, all or a portion of the opposing assembly 372 may be hingedly displaced relative to the engaging assembly 370 by the release mechanism. For example, a hinge may connect the opposing assembly 372 and the engaging assembly 370 at a first point, such as a front or back portion, with the release mechanism allowing the opposing assembly to rotate with respect to the hinge and displace downwardly. Further, the sealing device 316 may comprise a sealing element 384 in the engaging assembly 370 and at least one backing roller 382 in the opposing assembly 372. Thereby, when the opposing assembly 372 and the engaging assembly 370 are displaced from one another, the backing roller 382 and the sealing element 384 may be separated, which further facilitates insertion of the inflatable structure in the machine 310.

### Machine 610

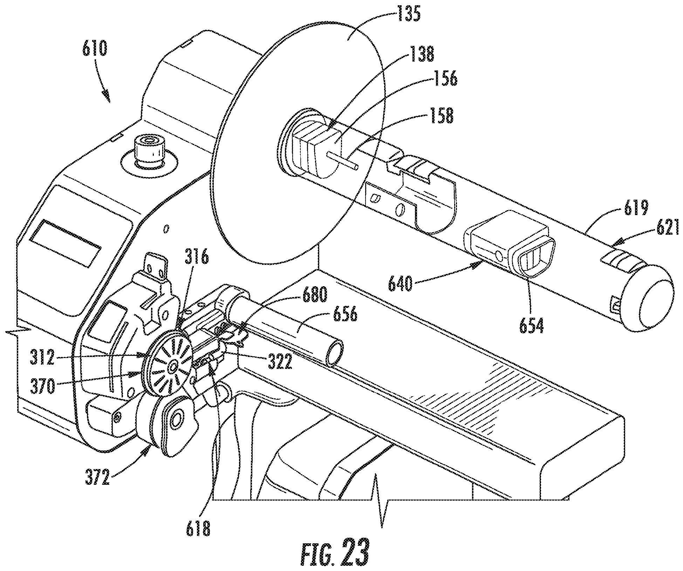

FIG. 23 illustrates machine 610 as an embodiment of a machine for inflating and sealing an inflatable web. As with some other embodiments described herein, the machine 610 may include engaging assembly 370 and an opposing assembly 372. The engaging assembly may include drive 312 for advancing an inflatable web therebetween (e.g., an inflatable web 26 as described herein and illustrated, for example, in FIG. 18 having a longitudinal edge 30, at least two sheets 36a and 36b, and a series of inflatable chambers 32 formed between the sheets, each of the inflatable chambers being capable of holding therein a quantity of a fluid 46 and having an opening 34 proximate the longitudinal edge for receiving the fluid during the inflation). The opposing assembly 372 may include the backing roller 382.

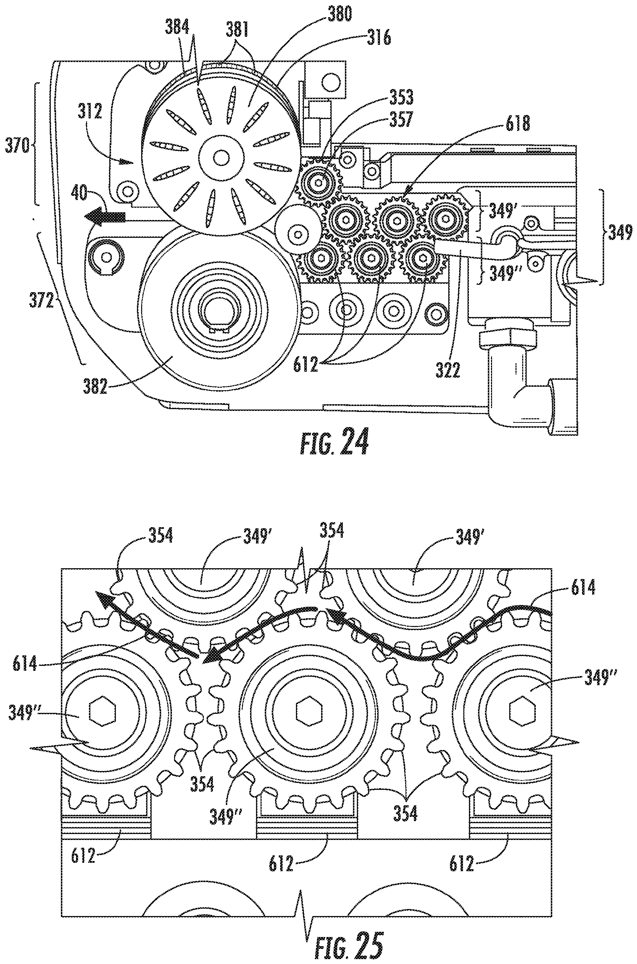

Machine 610 generally comprises a drive 312, an inflation nozzle 322, a sealing device 316, and a sheet engagement device 618. Drive 312 advances the inflatable web in a machine direction 40, for example, substantially parallel to the longitudinal edge of the inflatable web. (FIG. 24.) The drive 312 may comprise a drive roller 380 and a backing roller 382, which may be positioned such that a nip is formed therebetween when the drive roller and the backing roller contact. At least one of the rollers, such as the drive roller 380, may be linked to a motor to supply power to drive (i.e., rotate) the drive roller. When the drive roller 380 is in contact with the backing roller 382, the backing roller may also rotate to advance the inflatable web.

The drive 312 may be rotationally coupled to one or more of the engagement rollers 349 (described herein), for example via transmission roller 351, which rotationally connects the drive 312 to one or more of the engagement rollers 349, for example so that in operation the engagement rollers advance the inflatable web. The drive roller 380 of the drive 312 may be provided with teeth 381, which mesh with teeth 353 on the transmission roller 351 when the engagement rollers 349 also have teeth 354.

Machine 610 includes an inflation nozzle 322 for inflating the inflatable structure 26 with a fluid 46. The inflation nozzle 322 is positioned to direct the fluid into the openings of the inflatable chambers as the inflatable web is advanced in the machine direction 40, thereby inflating the inflatable chambers. Suitable inflation nozzles are described herein.

Machine 610 includes sealing device 316, which may be integral with the drive roller 380. The sealing device 316 may comprise a sealing element 384, as described herein. Sealing device 316 may be located proximate the inflation nozzle 322 for sealing closed the openings of the inflatable chambers after they are inflated with the fluid. (FIG. 24.)

Machine 610 includes a sheet engagement device 618 (FIGS. 23-24) comprising one or more engagement rollers 349 to engage the sheets of the inflatable web, for example, one or more top engagement rollers 349' and one or more bottom engagement rollers 349" opposing the one or more top engagement rollers to create a path of travel 614 between the top and bottom engagement rollers and adjacent the inflation nozzle 322 to engage the top and bottom sheets 36a, b together along the longitudinal edge 30 of the inflatable web 26 as it travels along the path of travel 614 to restrict the fluid 46 from escaping through the longitudinal edge of the inflatable web during inflation of the inflatable chambers before the inflatable chambers 32 are sealed.

The engagement rollers 349 may comprise a first or top plurality of rollers 349' positioned on one side of the sheets and a second or bottom plurality of rollers 349" positioned on an opposite side of the sheets when the inflatable structure is passed through the machine 610. The first plurality of rollers 349' may intermesh with the second plurality of rollers 349" as the inflatable structure moves along a path of travel 614 between the first plurality of rollers and the second plurality of rollers. As illustrated, the intermeshing may be facilitated by one or more of the engagement rollers 349 having teeth 354. The intermeshing may for example, operate to reduce a dimension of the longitudinal edge in the machine direction

At least one of the top and bottom engagement rollers may comprise a spring 612 to bias the at least one of the top and bottom engagement rollers toward the path of travel 614. Further, each engagement roller 349 of one or more of the first or second plurality of engagement rollers 349', 349" may comprises a spring 612 to bias the engagement roller toward the path of travel 614.

Although FIGS. 24-25 shows the second or bottom plurality of engagement rollers 349" biased by a spring 612, while the top or first plurality of engagement rollers 349' is not biased, this arrangement could be reversed (top plurality of engagement rollers 349' being biased or spring-loaded, while the bottom plurality of engagement rollers 349" not biased), or alternatively both the top and bottom plurality of engagement rollers could be biased toward the inflatable web. Although the illustrated embodiment shows each of the bottom engagement roller 349" having its own independent spring 612, a plurality of engagement rollers may be biased toward the inflatable web by a single spring or combined spring system.

Suitable springs include Belleville disc springs, compression springs, gas springs, pneumatic cylinders, or other biasing elements.

The incorporation of springs to bias the engagement rollers toward the path of travel allows the machine to better handle variations or changes in the thickness of the web, while also providing for quieter operation, more efficient use of inflation fluid, and reduced wear on the engagement rollers relative a machine without such springs.

### Active Alignment of Web

Machine 610 (FIG. 23) according to the invention includes a system for active alignment of an inflatable web 26 with respect to an inflation nozzle 322 as the web is dispensed from a roll 28 for serial inflation by the inflation nozzle. The system for active alignment moves the position of the roll along the spool as the machine operates to inflate the web to maintain optimal position of the web, for example, relative the inflation system, and includes a spool 619, an actuator 138, an inflation nozzle 322, a web tracking sensor 680, and a controller 94.

The spool 619 is adapted to support a roll 28 of inflatable web 26 so that the roll rotates about the spool as the inflatable web 26 is withdrawn from the roll 28. Suitable spools may include any of those described herein.

The system includes an actuator 138 arranged to adjust the position of the roll along the length of the spool. Suitable actuators include those described herein, for example, actuator 138 shown in more detail in FIGS. 8 to 9C and described in the text associated with those figures. As illustrated in FIG. 23, actuator includes motor 156, mounted within spool 619, to rotate drive screw 158 to move engagement member 134, which is hidden in FIG. 23 by disc 135, which rotates freely about spool 619 and abuts engagement member 134 so that the roll 26 contacts the disc 135 rather than the engagement member 134. The movement of the engagement member 134 causes movement of the roll along the length of the spool.

The inflation nozzle 322 is adapted to provide inflation fluid 46 into the openings 34 of the inflatable chambers 32 as the web 26 travels along a path of travel (e.g., 614) past the inflation nozzle. Suitable inflation nozzles include those described herein.

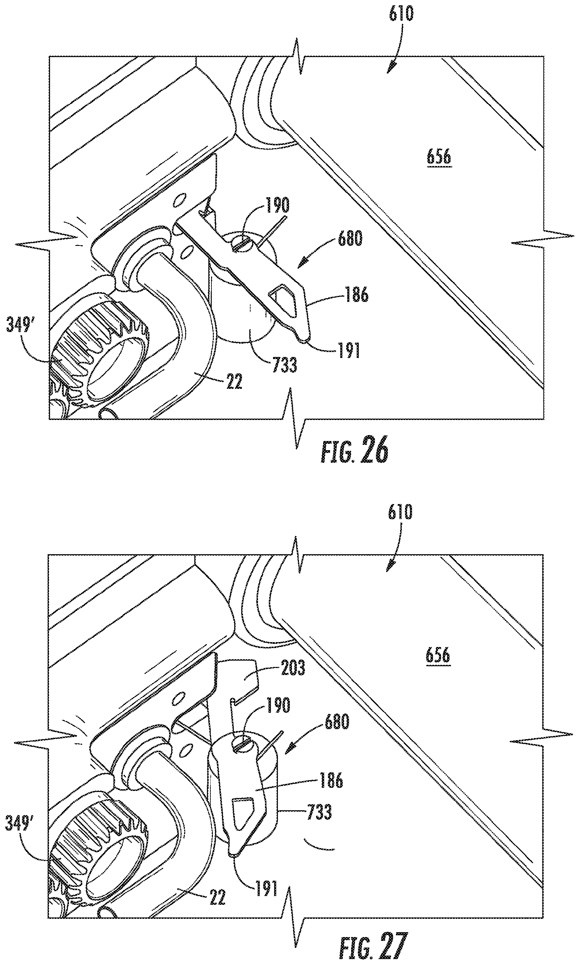

Tracking sensor 680 may be similar to tracking sensor 180 previously described herein, so that similar components and operation are not described in detail here. Tracking sensor includes sensor arm 186 pivotally mounted at pivot point 190 at a given location relative the inflation nozzle 322. (FIGS. 26-27.) The sensor arm 186 includes a contact portion 191. The sensor arm 186 is adapted to pivot on the pivot point 190 as the terminal ends 42 of the transverse seals 38 of the web 26 contact the contact portion 191 of the sensor arm 186. For example, the pivot point 190 may delineate the sensor arm 186 between the contact portion 191 and a tail portion 203 on opposing sides of the pivot point. In such case, as the sensor arm pivots on the pivot point 190 as the terminal ends 42 of the transverse seals 38 of the web contact the contact portion 191 of the sensor arm, the tail portion 203 of the sensor arm moves in the opposing direction.

An analogue sensor (e.g., rotary sensor 733) is adapted to detect the movement of the sensor arm 186 and to generate an analogue signal varying in proportion or relation to the amount of movement of the sensor arm, for example by sensing the amount of rotation of the pivot of the sensor arm 186. Alternative ways include an analogue sensor adapted to detect the movement of the tail portion 203 of the sensor arm 186 and to generate the analogue signal varying in proportion or relation to the amount of movement of the tail portion.

A controller (such as controller 94 previously described herein) is operative to receive the analogue signal, and based on the analogue signal, to send output to the actuator 138 to adjust the position of the roll 26 on the spool 619 by activating motor 156 to move the engagement member 134 by a selected amount and direction relative the spool, thereby maintaining the transverse position of the web within a predetermined range, for example, relative the inflation nozzle 322.

The provision of an analog sensor to detect the movement of the sensor arm, and as a result control the movement and adjustment of the position of the roll on spool 619, provides markedly better determination and control of the position of the transverse seal ends 42 of the inflatable web 26 relative to the inflation nozzle, in comparison to a system that utilizes discrete or "on/off" sensors. The analogue sensor system provides precise feedback of the transverse position of the transverse seal ends 42 without requiring the additional information regarding the pattern of the transverse seals or the size of the openings 34 for the inflatable chambers 32 of the inflatable web being run on the machine. Further, the desired tracking position for the transverse seal ends 42 relative the inflation nozzle or other machine components may be adjusted easily to another desired range simply by changing the setting for the desired analogue signal value in the programming of controller 94 to seek a different feedback value from the analogue sensor.

In contrast, the previously described discrete or "on/off" system for tracking detects the openings 34 of the inflatable chambers 32, and calculates the position of the transverse end seal 42 based on the discrete time values generated by the sensor that indicated the presence or absence of the opening 34. In this discrete sensor system, information based on the transverse seal pattern and the size of opening 34 of the inflatable web material is used to program the operation.

A variation of the use of a discrete or "on/off" sensor is to position the discrete sensor so that the sensor is triggered when the position of the sensor arm 186 indicates the edge 42 of transverse seal is in the desired position relative the inflation nozzle. The tracking system in this manner would position the web material so that the discrete sensor is flickering on and off rapidly as the openings 34 and transverse seal edges 42 pass by the sensor arm, since that "flickering" behavior indicates the sensor arm is in the desired position. This variation may, however, require more precise positioning of the sensor and sensor arm compared to the analogue sensor system described herein, and may not allow for adjustment of the desired tracking position for the web.

### Tension Control System

Machine 610 is shown in FIG. 23. Machine 610 (or any of the machines described herein) may include a system for controlling the tension of an inflatable web as the web 26 is dispensed from a roll 28 along a path of travel 40 for serial inflation by an inflation nozzle (e.g., inflation nozzle 322). The roll 28 has a core 114 defining a lumen and having an inner surface 116. (See, e.g., FIGS. 7, 9B, 9C.) The system includes a spool 619 (shown in phantom in FIG. 23) and a brake system supported by the spool. The spool 619 is adapted for insertion into the lumen of a core of the roll to support the roll so that the roll rotates about the spool as the inflatable web is withdrawn from the roll.

The brake system includes a brake pad 644 and a biasing element biasing the brake pad against the inner surface of the core to apply frictional resistance to the rotation of the roll. A power source is controllably operative to adjust the amount of bias of the biasing element, thereby to adjust the amount of frictional resistance applied by the brake pad to the inner surface of the core.

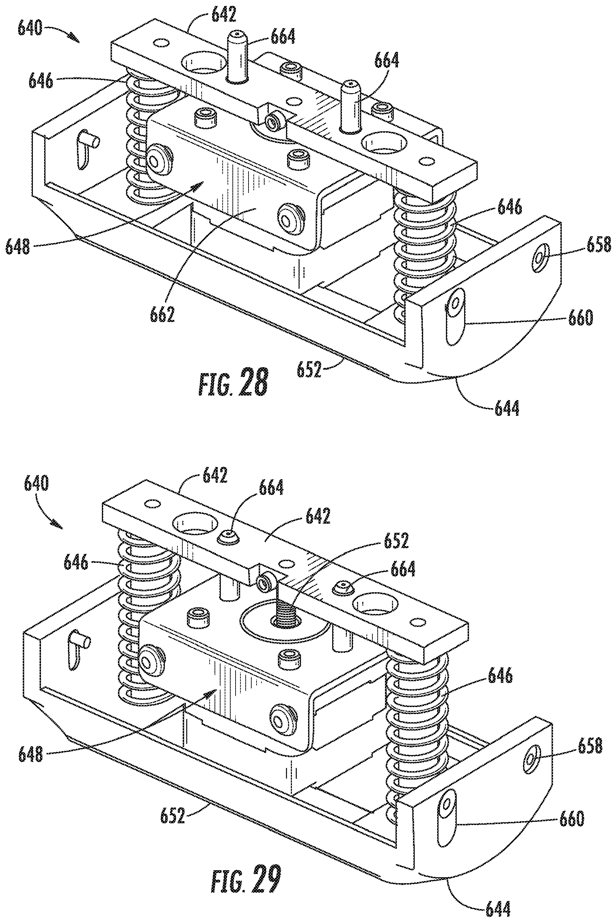

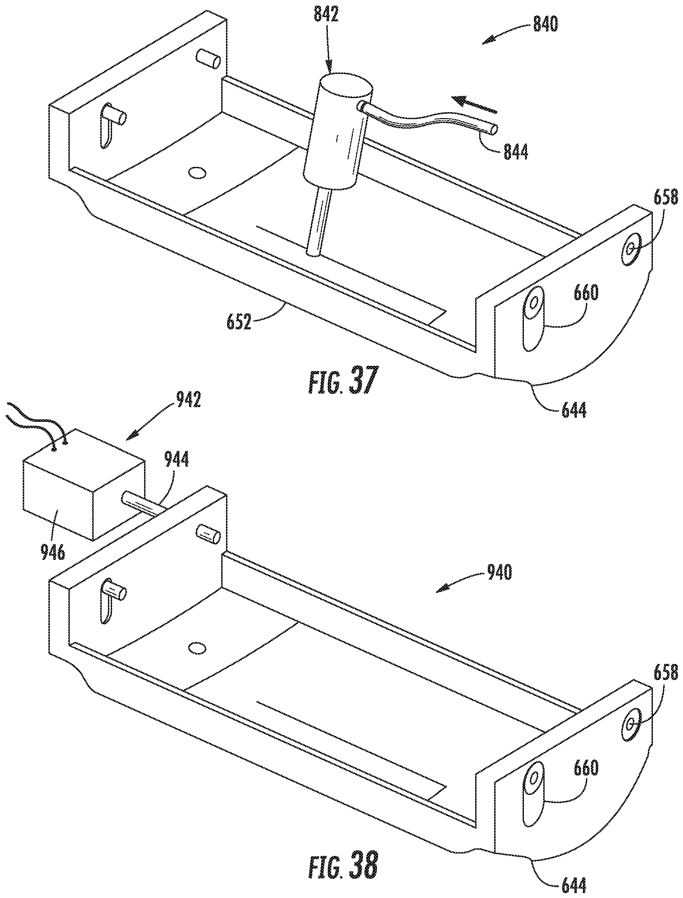

Three embodiments of the brake system are described. In a first embodiment, the biasing element is a spring and the power source is the motor of the actuator. (Figs. 28-29.) In a second embodiment, the biasing element is a hydraulic or pneumatic actuator, and the power source is a hydraulic pump or compressor, respectively. (Fig. 37.) In a third embodiment, the biasing element is a mechanical actuator and the power source is the motor of the actuator. (Fig. 38.)

In all embodiments, the biasing element (e.g., spring 646 or one or more springs 646) biases the brake pad 644 (e.g., braking surface 652) against the inner surface of the core of the roll 28 to apply frictional resistance to the rotation of the roll as it rotates about the spool. This frictional resistance may be varied in order to vary the amount of tension in the web as it advances from the roll through the machine.

Also in all embodiments, brake pad 644 may be pivotally supported by spool 619. For example, brake pad 644 may be pivotal about pivot axis 658, which may be connected to spool 619. Brake pad 644 may be pivotally supported along pivot axis 658, which may be proximate one side (i.e., a pivot side) of the brake pad 644. The biasing element (e.g., spring 646) may be connected to the brake pad 644 at the side opposite the pivot side (e.g., as shown in FIGS. 28-29). The pivoting movement may be guided by slot guide system 660 formed in brake pad 644. The brake pad 644 may extend through window opening 654 in spool 619. (FIG. 23.)

Spool 619 may support any of the brake systems (e.g., brake system 640), for example, by having spool 619 support the actuator body 662, for example, by mounting the actuator body to the spool so that the actuator body is stationary relative the spool. The actuator body may be fixedly connected to the spool. The braking system 640 may be mounted internally to the spool. (FIG. 23.)

In the first embodiment, brake system 640 includes brake pad 644, spring 646, and actuator 648 as described herein. (FIGS. 28-29.) Spring 646 is the biasing element. The controllably operative power source is the motor of actuator 648. Spring 646 is illustrated as a helical coil spring, but may include leaf springs, torsion springs, and any suitable biasing element. As shown, spring 646 may include at least two springs, which are connected to opposing ends of the brake pad 644.

Actuator 648 engages springs 646 and is arranged to adjust the compression force of the spring, thereby adjusting the amount of frictional resistance applied by the brake pad 644 to the inner surface of the core of the roll. The actuator 648 comprises body 662 and rod 652. Rod 652 engages the springs 646 and is extendible relative the actuator body 662 to adjust the compression force of the spring 646 in response to the distance that rod 652 extends from the actuator body 662. For example, the rod 652 is shown relatively extended from the actuator body in FIG. 29, which will decrease the compression force of the spring, and relatively withdrawn into the actuator body in FIG. 28, which will increase the compression force of the spring. The actuator 648 includes a motor (not visible) to drive the movement of rod 652.

One manner in which rod 652 may engage springs 646 is shown in FIGS. 28-29. One or more guide columns 664 may extend from actuator body 662. Beam 642 is connected to one end of rod 652 and also to spring 646. The beam 642 is slidably supported by the one or more guide columns. The spring extends from brake pad 644 to the beam 642. Thus, the movement of rod 652 in and out relative the actuator body 662 may be transferred to the spring 646.

In the second embodiment (FIG. 37), brake system 840 includes actuator brake pad 644 and hydraulic or pneumatic actuator 842. Hydraulic or pneumatic actuator 842 is the biasing element, and the controllably operative power source is a hydraulic pump in the case of a hydraulic actuator, and a compressor in the case of the pneumatic actuator. These are controllably operative by delivering varying amount or pressure of fluid via port 844.

In the third embodiment (FIG. 38), brake system 940 includes actuator brake pad 644 and mechanical actuator 942 as the biasing element. Mechanical actuator delivers a force through a rod, for example a rotative force provided via rod 944 driven by the motor 946 and coupled to the pivot axis 658. The controllably operative power source is the motor 946, which is powered for example by electricity and is controllably operative to varying the amount of force output in manners known in the art.

The system of web tension control may further include a web tension measurement device adjacent the path of travel 40 of the web 26 downstream of the roll to provide a signal in relation to the tension in the web. A controller (e.g. controller 94 as described herein) is operative to receive the signal and based on the signal to send an output to the controllably operative power source (described above) to adjust the bias of the biasing element in response to the output to maintain the tension of the web within a predetermined range. In adjusting the bias or the amount of bias (i.e., the bias force) of the biasing element, the dimensions of the biasing element may not change and/or the brake pad may not move physically when the bias is adjusted by increasing or decreasing the tension, but the force applied to the brake pad is adjusted, thereby changing the amount of friction.

In one embodiment (FIGS. 23, 26-27), the web tension measurement device includes tension arm 656 adjacent and transverse to the path of travel 40 of the web 26 downstream of the roll 28 and positioned to alter the direction of the path of travel of the web as the web contacts the tension arm. (See, e.g., FIG. 23.) Arm 656 may function in many ways similarly to tension rod 112 of FIG. 6 and as described in the text associated with FIG. 6. However, tension arm 656 of machine 610 may be configured to rotate as the web travels around the arm. Further, arm 656 may be attached to a force-sensing device (not visible), which provides a signal in response to the level of force applied by the web 26 against the arm 656 as the web travels about the arm and thus in relation to the tension in the web. Suitable force-sensing devices include, for example, one or more of a force-sensitive resistor (FSR), a strain gauge, a flexion sensor, and a bend sensor.

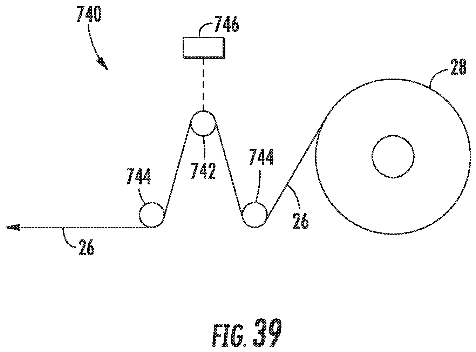

In another embodiment (FIG. 39), the web tension measurement device includes a dancer system 740 includes a dancer roller 742 that is adjacent and transverse to the path of travel of the web 26 downstream of the roll 28. The dancer roller 742 is positioned to alter the direction of the path of travel of the web 26 as the web contacts the dancer roller 742. The dancer roller 742 moves relative the amount of tension in the web 26. Dancer system 740 includes idler rollers 744, which are stationary (other than rotation). A sensor 746 is adapted to measure the movement of the dancer roller 742 and to provide the signal in response to the level of movement, which is indicative of the level of tension in the web.

In either embodiment, a controller (such as controller 94 previously described herein) is operative to receive the signal and, based on the signal, to send output to the actuator 648 to control the actuator motor to adjust the compression force of the one or more springs 646 to maintain the tension of the web 26 within a predetermined range. In this configuration, the system may actively adjust the amount of frictional resistance applied by the brake system to the core of roll 28 by actuating the actuator 648 to adjust the compression force of one or more springs 646 depending on the amount of tension present in the web as indicated by the force exerted on rod 656. The actuator 648 may be operatively responsive to the output from the controller 94 to move the rod 652 relative the actuator body 662 to adjust the compression of the spring 646. As a result, the amount of tension in the web 26 delivered from roll 28 may be actively controlled as the web is pulled from the roll by the drive 312. Alternatively, the amount of frictional resistance provided by brake system 640 may be more passively controlled, for example, by adjusting the actuator 648 to a desired position, based on, for example, the thickness, rigidity, or other properties of the web material.

### Machine 710

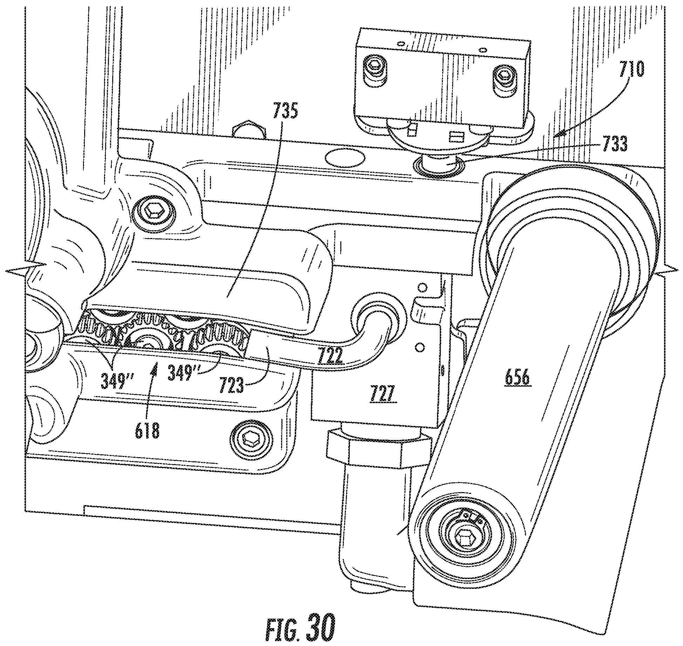

FIGS. 30-36 illustrate machine 710 as an embodiment of a machine for inflating and sealing an inflatable web. Machine 710 includes a system for alignment of an inflatable web 26 with respect to an inflation nozzle 722 as the web is dispensed from a roll 28 for serial inflation by the inflation nozzle.

The system of machine 710 includes a support 621 (as in FIG. 23), for example, spool 619, adapted to rotatively support a roll 28 of inflatable web 26 as the inflatable web 26 is withdrawn from the roll. Suitable supports and spools include any of those described herein.

The inflation nozzle 722 is adapted to provide inflation fluid 46 into the openings 34 of the inflatable chambers 32 as the web 26 travels along a path of travel past the inflation nozzle. The nozzle 722 may include outlet end 731 through which the inflation fluid 46 exits the nozzle. The inflation nozzle 722 may be adapted to provide the inflation fluid 46 in the same direction as the path of travel 40 of the inflatable web 26 that is adjacent the inflation nozzle. The inflation nozzle 722 comprises an engagement portion 723 movably biased to engage against the terminal ends 42 of the transverse seals 38 of the inflatable web 26 as the web advances past the inflation nozzle.

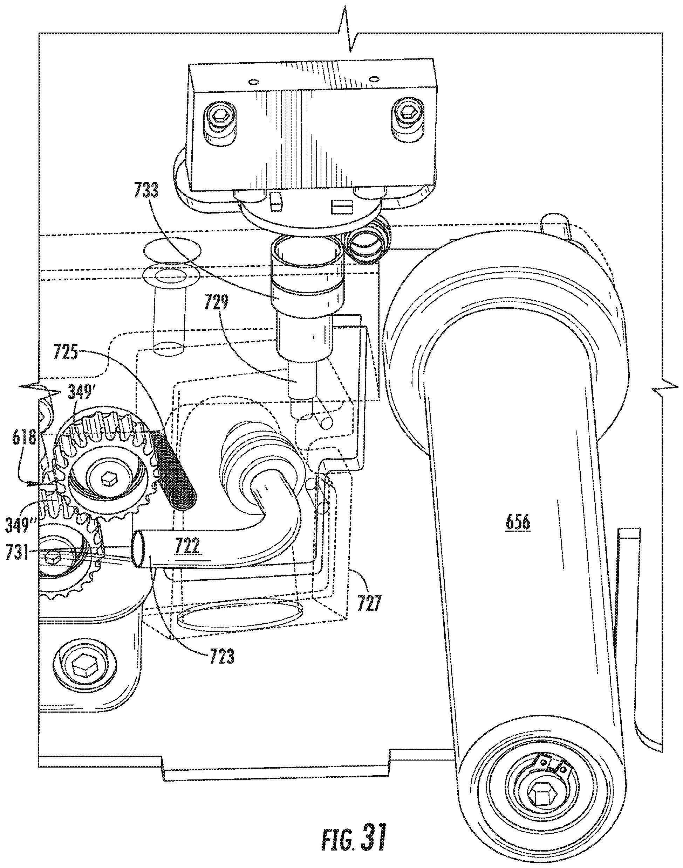

The engagement portion 723 of the inflation nozzle 722 may be movably biased toward (e.g., movably biased transversely toward) terminal ends 42 of the transverse seals 38 of the inflatable web 26 as the web advances past the inflation nozzle. For example, spring 725 (FIG. 31) may bias the engagement portion 723 of the inflation nozzle 722 toward the terminal ends 42 of the transverse seals 38 of the inflatable web 26 as the web advances past the inflation nozzle. The engagement portion 723 may be proximate the outlet end 731 of the inflation nozzle. As illustrated, nozzle 722 is supported by block 727, which in turn is biased by spring 725. Block 727 pivots about pivot axis 729. (FIG. 31.) Accordingly, inflation nozzle 722 pivots about pivot axis 729 as the engagement portion 723 engages against and tracks along the position of the terminal ends 42 of the transverse seals 38 of the inflatable web 26 as the web advances.

Sensor 733 may be used to detect the pivoting of the inflation nozzle 722 about the pivot axis 729. Sensor 733 may be a rotary sensor (as illustrated), or may be any other suitable type of sensors such as a potentiometer, an encoder, and a magnetic rotary. Sensor 733 generates a signal varying in proportion or relation to the amount or degree of pivot of the inflation nozzle (e.g., the pivot of block 727 by which the inflation nozzle is supported) thereby indicating the position of the transverse seals of the web upon which the inflation nozzle is biased.

As previously described herein, an actuator 138 may be arranged to adjust the position of the roll 28 along the length of the spool 619. (See, e.g., FIGS. 3, 8-9C, and 23.) A controller (e.g., controller 94 as herein described) may be operative to receive the signal from the sensor 733 and based on the signal to send output to the actuator 138 to adjust the position of the roll 28 on the spool 619 to maintain the transverse position of the web 26 (i.e., the position of the terminal ends 42 of the transverse seals) within a predetermined range.

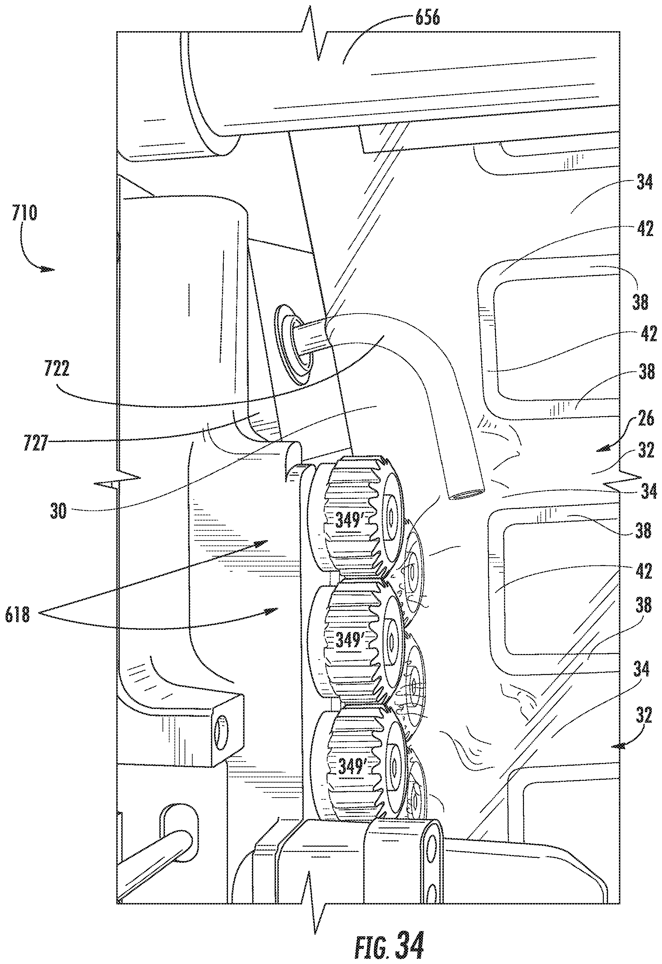

The system of machine 710 may include drive 312 (as previously described herein) downstream from the inflation nozzle 722 to withdraw the inflatable web 26 from the spool 719 to advance the inflatable web along the path of travel. The system may also include any of the sheet engagement devices (e.g., sheet engagement device 618) as previously described herein. For example (as described herein with respect to other machine embodiments) the sheet engagement device of machine 710 may include one or more springs to bias one or the other or both of the top and bottom engagement rollers 349 toward the inflatable web. The inflation nozzle 722 may extend between the sheet engagement device 618 and an inflatable chamber 32 of the web 26 as the web advances past the sheet engagement device 618. (See FIGS. 34-36.)

In operation, the web 26 may move its transverse position relative the inflation nozzle as the web advances past the inflation nozzle. This change in position of the web may be caused by one or more of several factors during normal operation, including that the web may not have been perfectly wound upon the roll in the first place. It is advantageous to maintain the position of the web in a desired position to help assure optimal operation of the inflation process at high speeds (e.g., with less leakage and noise from the inflation). As the web may move transversely as the web advances in the machine direction, the location of the terminal ends 42 of the transverse seals will also move, thus moving the engagement portion 723 of the inflation nozzle 722 that is movably biased against the terminal ends. The movement of the engagement portion causes corresponding rotation of the pivot axis 729, which is sensed by sensor 733, for example, a rotary sensor that generates an analogue signal varying in proportion or relation to the amount of movement or rotation of the pivot axis 729. The controller receives the signal, compares it to determine if the signal is within the desired range, and if outside the range sends output to the actuator 138 to adjust the position of the roll 26 on the spool 619 by activating motor 156 to move the engagement member 134 by a selected amount and direction relative the spool (see FIGS. 3, 8-9C, and 23). The web is adjusted to a new position, and a new signal is received by the controller, which then determines whether the signal is within the desired range such that the web is in the desired transverse position. The system provides increased detection resolution of the location of the transverse seal edge 42 of the web 26, and the inner edge formed by the ends 42 of the transverse seals, and can also be used to detect the inflation openings 34 if desired.

## Claims

1. A system for active alignment of an inflatable web (26) with respect to an inflation nozzle (322) as the web is dispensed from a roll (28) for serial inflation by the inflation nozzle, the inflatable web (26) including top and bottom sheets (36a, 36b) sealed together by transverse seals (38) to define a series of inflatable chambers (32) having an opening (34) between the terminal ends of the transverse seals (38) and proximate a longitudinal edge (30a) of the web for receiving inflation fluid from the nozzle (322), the system comprising:
a spool (619) adapted to support the roll (28) so that the roll rotates about the spool (619) as the inflatable web is withdrawn from the roll;
an actuator (138) arranged to adjust the position of the roll along the length of the spool (619);
an inflation nozzle (322) adapted to provide inflation fluid into the openings of the inflatable chambers (32) as the web travels along a path of travel past the inflation nozzle (322);
a tracking sensor (680) comprising:
a sensor arm (186) pivotally mounted at a pivot point (190) at a given location relative the inflation nozzle (322), the sensor arm (186) having a contact portion (191), the sensor arm (186) adapted to pivot on the pivot point (190) as the terminal ends (42) of the transverse seals (38) of the web contact the contact portion (191) of the sensor arm (186); the system being **characterised in that** the tracking sensor (680) comprises
an analogue sensor (733) adapted to detect the movement of the sensor arm (186) and to generate an analogue signal varying in relation to the movement of the sensor arm, and **in that** the system comprises further
a controller (94) operative to receive the analogue signal and based on the analogue signal to send output to the actuator to adjust the position of the roll on the spool to maintain the transverse position of the web within a predetermined range.

2. The system of claim 1 wherein the analogue sensor comprises a rotary sensor (733) detecting the pivoting movement of the sensor arm (186).

3. The system of any one of the previous claims wherein:
the pivot point (190) delineates the sensor arm (186) between the contact portion (191) and a tail portion (203) on opposing sides of the pivot point (190);
the sensor arm (186) is adapted to pivot on the pivot point (190) as the terminal ends (42) of the transverse seals (38) of the web contact the contact portion (191) of the sensor arm (186) to move the tail portion (203) of the sensor arm in the opposing direction; and
the analogue sensor (733) is adapted to detect the movement of the tail portion (203) of the sensor arm (186) and to generate the analogue signal varying in relation to the amount of movement of the tail portion (203).

4. The system of any one of the previous claims further comprising a drive downstream from the inflation nozzle (322) for withdrawing the inflatable web (26) from the spool (619) to advance the inflatable web in the machine direction along the path of travel.

5. The system of any one of the previous claims wherein the controller (94) is operative to send output to the actuator (138) to adjust the position of the roll (28) on the spool (619) to maintain the transverse position of the web within a predetermined range relative the inflation nozzle.

6. The system of claim 1, further comprising:
a drive (312) for advancing the inflatable web in a machine direction (40); and
a sheet engagement device (618) comprising
one or more top engagement rollers (349') and one or more bottom engagement rollers (349") opposing the one or more top engagement rollers to engage the sheets together along the longitudinal edge (30) of the inflatable web (26) as the web advances in the machine direction (40) to restrict the fluid from escaping through the longitudinal edge of the inflatable web during inflation of the inflatable chambers (32); and
at least one spring (612) to bias one or more of the top and bottom engagement rollers (349', 349") toward the inflatable web.

7. The system of claim 6 wherein one or more springs (612) bias one or more of each of the engagement rollers of the top and bottom engagement rollers (349', 349") toward the inflatable web.

8. The system of any one of claims 6 to 7 wherein:
the one or more top engagement rollers (349') comprise a first plurality of engagement rollers and the one or more bottom engagement rollers (349") comprise a second plurality of engagement rollers;
each engagement roller of one or more of the first or second plurality of engagement rollers comprises a spring to bias the engagement roller toward the path of travel; and
the first plurality of engagement rollers intermesh with the second plurality of engagement rollers and thereby reduce a dimension of the longitudinal edge in the machine direction.

9. The system of any one of claims 6 to 8 further defining an engaging assembly (370) and an opposing assembly (372) with the drive (312) advancing the inflatable web therebetween, and comprising a release mechanism configured to displace at least a portion of the opposing assembly (372) from the engaging assembly (370) by a displacement distance, wherein the release mechanism is further configured to displace the inflation nozzle (322) from the engaging assembly (370) by an intermediate displacement distance which is less than the displacement distance.

10. The system of claim 1, wherein:
the spool (619) is adapted for insertion into the lumen of the core;
the system further comprises a brake system (640) supported by the spool (619), the brake system (640) comprising:
a brake pad (644);
a biasing element (646) biasing the brake pad (644) against the inner surface of the core to apply frictional resistance to the rotation of the roll, wherein a power source is controllably operative to adjust the amount of bias of the biasing element, thereby to adjust the amount of frictional resistance applied by the brake pad (644) to the inner surface of the core.

11. The system of claim 10 wherein the biasing element (646) is at least one of an hydraulic actuator and the power source is an hydraulic pump, a pneumatic actuator and the power source is a compressor, wherein the biasing element is mechanical actuator and the power source is a motor.

12. The system of claim 11 wherein:
the biasing element (646) is a spring that is adjustable in the amount of bias provided by an actuator engaging the spring and arranged to adjust the compression force of the spring; and
the power source is a motor of the actuator.

13. The system of claim 12 wherein the actuator (648) comprises a body (662) and a rod (652) engaging the spring (646), the rod (652) being extendible relative the actuator body (662) to adjust the compression force of the spring (646) in response to the distance that the rod (652) extends from the actuator body (662).

14. The system of any one of claims 10 to 13 wherein the braking system further comprises:
one or more guide columns (664) that extend from the actuator body (662); and
a beam (642) connected to the rod (652) and to the spring (646), wherein:
the beam (642) is slidably supported by the one or more guide columns (664); and
the spring (646) extends from the brake pad (644) to the beam (642).

15. The system of any one of claims 10 to 14 further comprising:
a web tension measurement device adjacent the path of travel of the web downstream of the roll to provide a signal in relation to the tension in the web; and
a controller operative to receive the signal and based on the signal to send an output to the controllably operative power source to adjust the bias of the biasing element in response to the output to maintain the tension of the web within a predetermined range.

## Patentansprüche

1. System zum aktiven Ausrichten einer aufblasbaren Bahn (26) in Bezug auf eine Aufblasdüse (322), während die Bahn zum aufeinander folgenden Aufblasen durch die Aufblasdüse von einer Rolle (28) abgegeben wird, wobei die aufblasbare Bahn (26) obere und untere Lagen (36a, 36b) aufweist, die durch querverlaufende Siegelungen (38) aneinander gesiegelt sind, um eine Folge von aufblasbaren Kammern (32) zu definieren, die eine Öffnung zwischen den Abschlussenden der querverlaufenden Siegelungen (38) und nahe der Längskante (30a) der Bahn haben, um Aufblasfluid aus der Düse (322) aufzunehmen, wobei das System aufweist:
eine Spule (619), die dazu ausgestaltet ist, um die Rolle (28) zu tragen, so dass die Rolle sich um die Spule (619) dreht, wenn die aufblasbare Bahn von der Rolle abgezogen wird,
einen Aktuator (138), der dazu ausgestaltet ist, um die Position der Rolle entlang der Länge der Spule (619) einzustellen,
eine Aufblasdüse (322), die dazu eingerichtet ist, um Aufblasfluid in die Öffnungen der aufblasbaren Kammern (32) zu fördern, während die Bahn entlang eines Förderweges vorbei an der Aufblasdüse (322) gefördert wird, einen Verfolgungssensor (680) mit:
einem Sensorarm (186), der an einem gegebenen Ort relativ zu der Aufblasdüse (322) an einem Schwenkpunkt (190) schwenkbar angebracht ist, wobei der Sensorarm (186) einen Kontaktbereich (191) hat, wobei der Sensorarm (186) dazu ausgestaltet ist, um den Schwenkpunkt (190) herum zu schwenken, wenn die querverlaufenden Siegelungen (38) der Bahn den Kontaktbereich (191) des Sensorarms (186) kontaktieren,
wobei das System **dadurch gekennzeichnet ist, dass** der Verfolgungssensor (680) aufweist
einem analogen Sensor (733), der dazu ausgestaltet ist, um die Bewegung des Sensorarms (186) zu erfassen und ein analoges Signal zu erzeugen, das in Relation zu der Bewegung des Sensorarms variiert, und dass das System weiterhin aufweist
eine Steuereinheit (94), die funktionsfähig ist, um das analoge Signal aufzunehmen und auf Grundlage des analogen Signals eine Ausgabe an den Aktuator zu senden, um die Position der Rolle auf der Spule einzustellen, um die Querposition der Bahn innerhalb eines vorgegebenen Bereichs zu halten.

2. System nach Anspruch 1, wobei der analoge Sensor einen Rotationssensor (733) aufweist, der die Schwenkbewegung des Sensorarms (186) erfasst.

3. System nach einem der vorhergehenden Ansprüche, wobei:
der Schwenkpunkt (190) den Sensorarm (186) in den Kontaktbereich (191) und einen Endabschnitt (203) auf gegenüberliegenden Seiten des Schwenkpunkts (190) unterteilt,
der Sensorarm (186) dazu ausgestaltet ist, um den Schwenkpunkt (190) herum zu schwenken, wenn die Abschlussenden (42) der querverlaufenden Siegelungen (38) der Bahn den Kontaktbereich (191) des Sensorarms (186) kontaktieren, um den Endabschnitt (203) des Sensorarm in entgegengesetzte Richtung zu bewegen, und
der analoge Sensor (733) dazu eingerichtet ist, um die Bewegung des Endabschnitts (203) des Sensorarms (186) zu erfassen und das analoge Signal variierend in Relation zum Ausmaß der Bewegung des Endabschnitts (203) zu erzeugen.

4. System nach einem der vorhergehenden Ansprüche, das ferner einen Antrieb stromabwärts der Aufblasdüse (322) aufweist, um die aufblasbare Bahn (26) von der Spule (619) abzuziehen, um die aufblasbare Bahn in der Maschinenrichtung entlang des Förderweges vorwärts zu bewegen.

5. System nach einem der vorhergehenden Ansprüche, wobei die Steuereinheit (94) dazu funktionsfähig ist, um Ausgaben zu dem Aktuator (138) zu senden, um die Position der Rolle (28) auf der Spule (619) einzustellen, um die Querposition der Bahn innerhalb eines vorgegebenen Bereichs relativ zu der Aufblasdüse zu halten.

6. System nach Anspruch 1, weiterhin mit:
einem Antrieb (312), um die aufblasbare Bahn in einer Maschinenrichtung (40) vorwärts zu bewegen, und
einer Lagenangriffsvorrichtung (618) mit
einer oder mehreren oberen Anlagerollen (349') und einer oder mehreren unteren Anlagerollen (349''), die der einen oder den mehreren oberen Anlagerollen gegenüberliegen, um die Lagen zusammen entlang der Längskante (30) der aufblasbaren Bahn (26) zu greifen, während die Bahn in der Maschinenrichtung (40) vorwärts bewegt wird, um Entweichen von Fluid durch die Längskante der aufblasbaren Bahn, während die aufblasbaren Kammern (32) aufgeblasen werden, zu beschränken, und
wenigstens einer Feder (612) um die eine oder mehreren oberen und unteren Anlagerollen (349', 349'') zu der aufblasbaren Bahn hin vorzuspannen.

7. System nach Anspruch 6, wobei die eine oder mehreren Federn (612) die eine oder mehreren von jeder der Anlagerollen von den oberen und unteren Anlagerollen (349', 349'') zu der aufblasbaren Bahn hin vorspannen.

8. System nach einem der Ansprüche 6 bis 7, wobei:
die eine oder die mehreren oberen Anlagerollen (349') eine erste Mehrzahl von Anlagerollen und die eine oder die mehreren unteren Anlagerollen (349'') eine zweite Mehrzahl von Anlagerollen aufweisen,
jede Anlagerolle von einer oder mehreren aus der ersten und der zweiten Vielzahl von Anlagerollen eine Feder aufweist, um die Anlagerolle zu dem Förderweg hin vorzuspannen, und
die erste Mehrzahl von Anlagerollen und die zweite Mehrzahl von Anlagerollen miteinander kämmen, um dadurch eine Länge der Längskante in der Maschinenrichtung zu reduzieren.

9. System nach einem der Ansprüche 6 bis 8, das weiter einen Eingriffsaufbau (370) und einen gegenüberliegenden Aufbau (372) definiert, wobei der Antrieb (312) die aufblasbare Bahn dazwischen vorwärts bewegt, und mit einem Öffnungsmechanismus, der dazu ausgestaltet ist, um wenigstens einen Bereich des gegenüberliegenden Aufbaus (372) von dem Eingriffsaufbau (370) um eine Verschiebungsstrecke weg zu bewegen, wobei der Öffnungsmechanismus weiter dazu ausgestaltet ist, um die Aufblasdüse (322) von dem Eingriffsaufbau (370) um eine dazwischen liegende Verschiebungsstrecke weg zu bewegen, die kleiner als die Verschiebungsstrecke ist.

10. System nach Anspruch 1, wobei:
die Spule (619) dazu eingerichtet ist, um in den Hohlraum des Kerns eingeführt zu werden,
wobei das System weiterhin ein von der Spule (619) getragenes Bremssystem (640) aufweist, wobei das Bremssystem (640) aufweist:
eine Bremsbacke (644),
ein Vorspannelement (646), das die Bremsbacke (644) gegen die innere Oberfläche des Kerns vorspannt, um Reibungswiderstand gegen die Drehung der Rolle zu erzeugen, wobei eine Energiequelle steuerbar funktionsfähig dazu ist, um den Grad der Vorspannung des Vorspannungselements einzustellen, um dadurch den Betrag der durch die Bremsbacke (644) auf die innere Oberfläche des Kerns ausgeübten Reibungswiderstands einzustellen.

11. System nach Anspruch 10, wobei das Vorspannelement (646) wenigstens eines von einem hydraulischen Aktuator, und die Energiequelle eine hydraulische Pumpe, einem pneumatischen Aktuator ist und die Energiequelle ein Kompressor ist, wobei das Vorspannelement ein mechanischer Aktuator und die Energiequelle ein Motor ist.

12. System nach Anspruch 11, wobei:
das Vorspannelement (646) eine Feder ist, die in Bezug auf die Stärke der Vorspannung einstellbar ist, die von einem Aktuator bereitgestellt wird, der an der Feder angreift und dazu eingerichtet ist, die Kompressionskraft der Feder einzustellen, und
die Energiequelle ein Motor des Aktuators ist.

13. System nach Anspruch 12, wobei der Aktuator (648) ein Gehäuse (662) und eine Strebe (652) aufweist, die an der Feder (646) angreift, wobei die Strebe (652) relativ zu dem Aktuatorgehäuse (662) ausstellbar ist, um die Kompressionskraft der Feder (646) nach Maßgabe des Abstands, mit dem die Strebe (652) von dem Aktuatorgehäuse (662) vorsteht, einzustellen.

14. System nach einem der Ansprüche 10 bis 13, wobei das Bremssystem weiter aufweist:
eine oder mehrere Führungssäulen (664), die von dem Aktuatorgehäuse (662) vorstehen, und
einen Träger (642), der mit der Strebe (652) und der Feder (646) verbunden ist, wobei:
der Träger gleitfähig durch die eine oder mehreren Führungssäulen gelagert ist, und
die Feder (646) von der Bremsbacke (644) zu dem Träger (642) verläuft.

15. System nach einem der Ansprüche 10 bis 14, weiterhin mit:
einer Messvorrichtung für die Bahnspannung, die benachbart zu dem Förderweg der Bahn stromabwärts der Rolle angeordnet ist, um ein Signal in Relation zu der Spannung in der Bahn zu liefern, und
einer Steuereinheit, die dazu funktionsfähig ist, um das Signal zu empfangen und auf Basis des Signals eine Ausgabe zu der steuerbar betreibbaren Energiequelle zu senden, um die Vorspannung des Vorspannelements in Reaktion auf die Ausgabe einzustellen, um die Spannung der Bahn innerhalb eines vorgegebenen Bereichs zu halten.

## Revendications

1. Système pour l'alignement actif d'une bande gonflable (26) par rapport à une buse de gonflage (322) lorsque la bande est distribuée d'un rouleau (28) pour le gonflage en série par la buse de gonflage, la bande gonflable (26) incluant des feuilles supérieure et inférieure (36a, 36b) scellées ensemble par des joints transversaux (38) pour définir une série de chambres gonflables (32) présentant une ouverture (34) entre les extrémités terminales des joints transversaux (38) et à proximité d'une arête longitudinale (30a) de la bande pour la réception de fluide de gonflage de la buse (322), le système comprenant :
une bobine (619) adaptée pour supporter le rouleau (28) de sorte que le rouleau tourne autour de la bobine (619) lorsque la bande gonflable est retirée du rouleau ;
un actionneur (138) agencé pour ajuster la position du rouleau le long de la longueur de la bobine (619) ;
une buse de gonflage (322) adaptée pour fournir un fluide de gonflage dans les ouvertures des chambres gonflables (32) lorsque la bande se déplace le long d'un trajet de déplacement après la buse de gonflage (322) ;
un capteur de suivi (680) comprenant :
un bras de capteur (186) monté de manière pivotante au niveau d'un point de pivotement (190) à un emplacement donné par rapport à la buse de gonflage (322), le bras de capteur (186) présentant une portion de contact (191), le bras de capteur (186) étant adapté pour pivoter sur le point de pivotement (190) lorsque les extrémités terminales (42) des joints transversaux (38) de la bande touchent la portion de contact (191) du bras de capteur (186) ; le système étant **caractérisé en ce que** le capteur de suivi (680) comprend
un capteur analogique (733) adapté pour détecter le mouvement du bras de capteur (186) et pour générer un signal analogique variant en relation avec le mouvement du bras de capteur, et **en ce que** le système comprend en outre
un dispositif de commande (94) conçu pour recevoir le signal analogique et basé sur le signal analogique pour délivrer une sortie à l'actionneur afin d'ajuster la position du rouleau sur la bobine pour maintenir la position transversale de la bande dans une plage prédéterminée.

2. Système selon la revendication 1, dans lequel le capteur analogique comprend un capteur rotatif (733) détectant le mouvement pivotant du bras de capteur (186).

3. Système selon l'une quelconque des revendications précédentes, dans lequel :
le point de pivotement (190) délimite le bras de capteur (186) entre la portion de contact (191) et une portion arrière (203) sur des côtés opposés du point de pivotement (190) ;
le bras de capteur (186) est adapté pour pivoter sur le point de pivotement (190) lorsque les extrémités terminales (42) des joints transversaux (38) de la bande touchent la portion de contact (191) du bras de capteur (186) pour déplacer la portion arrière (203) du bras de capteur dans la direction opposée ; et
le capteur analogique (733) est adapté pour détecter le mouvement de la portion arrière (203) du bras de capteur (186) et pour générer le signal analogique variant en relation avec la quantité de mouvement de la portion arrière (203).

4. Système selon l'une quelconque des revendications précédentes, comprenant en outre un entraînement en aval de la buse de gonflage (322) pour le retrait de la bande gonflable (26) de la bobine (619) pour faire avancer la bande gonflable dans la direction de machine le long du trajet de déplacement.

5. Système selon l'une quelconque des revendications précédentes, dans lequel le dispositif de commande (94) est conçu pour délivrer une sortie à l'actionneur (138) afin d'ajuster la position du rouleau (28) sur la bobine (619) pour maintenir la position transversale de la bande dans une plage prédéterminée par rapport à la buse de gonflage.

6. Système selon la revendication 1, comprenant en outre :
un entraînement (312) pour l'avance de la bande gonflable dans une direction de machine (40) ; et
un dispositif de mise en prise de feuille (618) comprenant
un ou plusieurs rouleaux de mise en prise supérieurs (349') et un ou plusieurs rouleaux de mise en prise inférieurs (349") opposés aux un ou plusieurs rouleaux de mise en prise supérieurs pour mettre en prise les feuilles ensemble le long de l'arête longitudinale (30) de la bande gonflable (26) lorsque la bande avance dans la direction de machine (40) pour restreindre le fluide dans son échappement au travers de l'arête longitudinale de la bande gonflable pendant le gonflage des chambres gonflables (32) ; et
au moins un ressort (612) pour solliciter un ou plusieurs des rouleaux de mise en prise supérieurs et inférieurs (349', 349") vers la bande gonflable.

7. Système selon la revendication 6, dans lequel un ou plusieurs ressorts (612) sollicitent un ou plusieurs de chacun des rouleaux de mise en prise des rouleaux de mise en prise supérieurs et inférieurs (349', 349") vers la bande gonflable.

8. Système selon l'une quelconque des revendications 6 à 7, dans lequel :
les un ou plusieurs rouleaux de mise en prise supérieurs (349') comprennent une première pluralité de rouleaux de mise en prise et les un ou plusieurs rouleaux de mise en prise inférieurs (349") comprennent une seconde pluralité de rouleaux de mise en prise ;
chaque rouleau de mise en prise des un ou plusieurs de la première ou seconde pluralité de rouleaux de mise en prise comprend un ressort pour solliciter le rouleau de mise en prise vers le trajet de déplacement ; et
la première pluralité de rouleaux de mise en prise s'engrène avec la seconde pluralité de rouleaux de mise en prise et réduit ainsi une dimension de l'arête longitudinale dans la direction de machine.

9. Système selon l'une quelconque des revendications 6 à 8, définissant en outre un ensemble de mise en prise (370) et un ensemble opposé (372),
l'entraînement (312) faisant avancer la bande gonflable entre eux, et comprenant un mécanisme de libération configuré pour déplacer au moins une portion de l'ensemble opposé (372) de l'ensemble de mise en prise (370) d'une distance de déplacement, dans lequel le mécanisme de libération est en outre configuré pour déplacer la buse de gonflage (322) de l'ensemble de mise en prise (370) d'une distance de déplacement intermédiaire qui est inférieure à la distance de déplacement.

10. Système selon la revendication 1, dans lequel :
la bobine (619) est adaptée pour l'insertion dans le lumen du cœur ;
le système comprend en outre un système de frein (640) supporté par la bobine (619), le système de frein (640) comprenant :
un patin de frein (644) ;
un élément de sollicitation (646) sollicitant le patin de frein (644) contre la surface intérieure du cœur pour appliquer une résistance à la friction à la rotation du rouleau, dans lequel une source d'alimentation est conçue de manière commandable pour ajuster la quantité de sollicitation de l'élément de sollicitation, ainsi pour ajuster la quantité de résistance à la friction appliquée par le patin de frein (644) à la surface intérieure du cœur.

11. Système selon la revendication 10, dans lequel l'élément de sollicitation (646) est au moins un d'un actionneur hydraulique et la source d'alimentation est une pompe hydraulique, un actionneur pneumatique et la source d'alimentation est un compresseur, dans lequel l'élément de sollicitation est un actionneur mécanique et la source d'alimentation est un moteur.

12. Système selon la revendication 11, dans lequel :
l'élément de sollicitation (646) est un ressort qui est ajustable dans la quantité de sollicitation fournie par un actionneur mettant en prise le ressort et agencé pour ajuster la force de compression du ressort ; et
la source d'alimentation est un moteur de l'actionneur.

13. Système selon la revendication 12, dans lequel l'actionneur (648) comprend un corps (662) et une tige (652) mettant en prise le ressort (646), la tige (652) étant extensible par rapport au corps d'actionneur (662) pour ajuster la force de compression du ressort (646) en réponse à la distance de laquelle la tige (652) s'étend du corps d'actionneur (662).

14. Système selon l'une quelconque des revendications 10 à 13, dans lequel le système de freinage comprend en outre :
une ou plusieurs colonnes de guidage (664) qui s'étendent depuis le corps d'actionneur (662) ; et
une poutre (642) raccordée à la tige (652) et au ressort (646), dans lequel :
la poutre (642) est supportée de manière coulissante par les une ou plusieurs colonnes de guidage (664) ; et
le ressort (646) s'étend du patin de frein (644) à la poutre (642).

15. Système selon l'une quelconque des revendications 10 à 14, comprenant en outre :
un dispositif de mesure de tension de bande adjacent au trajet de déplacement de la bande en aval du rouleau pour fournir un signal en relation avec la tension dans la bande ; et
un dispositif de commande conçu pour recevoir le signal et basé sur le signal pour délivrer une sortie à la source d'alimentation conçue de manière commandable pour ajuster la sollicitation de l'élément de sollicitation en réponse à la sortie pour maintenir la tension de la bande dans une plage prédéterminée.
